(19) Europäisches Patentamt
European Patent Office
Office européen des brevets

(11) EP 4 722 760 A1

(12) **EUROPÄISCHE PATENTANMELDUNG**

(43) Veröffentlichungstag:
**08.04.2026 Patentblatt 2026/15**

(21) Anmeldenummer: **25206096.7**

(22) Anmeldetag: **01.10.2025**

(51) Internationale Patentklassifikation (IPC):
***G01S 19/07*** *(2010.01)*

(52) Gemeinsame Patentklassifikation (CPC):
**G01S 19/071**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **07.10.2024 DE 102024128793**

(71) Anmelder: **Wirtgen GmbH**
**53578 Windhagen (DE)**

(72) Erfinder:
- **Fritz, Matthias**
  **53773 Hennef (DE)**
- **Müller, René**
  **53560 Vettelschoß (DE)**
- **Rossa, Manuel**
  **52070 Aachen (DE)**
- **Troß, Michael**
  **56269 Dierdorf (DE)**
- **DeJong, Ruud**
  **N. Boone St., 62450 (US)**

(74) Vertreter: **Oppermann, Frank**
**OANDO Oppermann & Oppermann**
**Thurn-und-Taxis-Platz 6**
**60313 Frankfurt am Main (DE)**

(54) **VERFAHREN ZUM FESTLEGEN EINES REFERENZSTATIONS-AUFSTELLPUNKTES ZUM AUFSTELLEN EINER REFERENZSTATION UND EIN VERFAHREN ZUR BESTIMMUNG DER POSITION EINES BAUMASCHINEN-REFERENZPUNKTES SOWIE EIN POSITIONSBESTIMMUNGSSYSTEM UND EIN BAUMASCHINENSYSTEM**

(57) Die Erfindung betrifft ein Verfahren zum Festlegen eines Referenzstations-Aufstellpunktes (P1(X1, Y1, Z1), P2(X2, Y2, Z2), P3(X3, Y3, Z3), P4(X4, Y4, Z4), PN(XN, YN, ZN)) zum Aufstellen einer Referenzstation (15) im Umkreis einer sich im Gelände bewegenden selbstfahrenden Baumaschine (I). Die Baumaschine wird bis zu einem Wegpunkt im Gelände bewegt, in dessen Umkreis eine Referenzstation (15) aufgestellt werden soll. An diesem Wegpunkt werden die Position des Baumaschinen-Referenzpunktes (R) auf der Baumaschine beschreibende Positionsdaten auf der Grundlage der Satellitensignale eines globalen Navigationssatellitensystems (S) und der Korrektursignale einer im Umkreis der Bodenbearbeitungsmaschine bereits im Gelände aufgestellten Referenzstation bestimmt. Die die Position des Referenzstations-Aufstellpunktes beschreibenden Positionsdaten werden auf der Grundlage der die Position des Baumaschinen-Referenzpunktes (R) auf der Baumaschine (I) an diesem Wegpunkt beschreibenden Positionsdaten und der vorgegebenen räumlichen Beziehung zwischen dem Baumaschinen-Referenzpunkt (R) und dem als Referenzstations-Aufstellpunkt auf der Geländeoberfläche festgelegten Punkt bestimmt. Darüber hinaus betrifft die Erfindung ein Verfahren und ein Positionsbestimmungssystem (II) zur Bestimmung der Position eines Referenzpunktes auf einer selbstfahrenden Baumaschine.

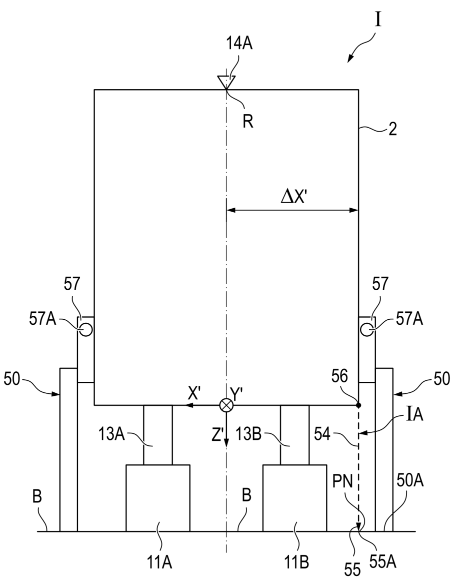


Fig. 10

EP 4 722 760 A1

## Beschreibung

Die Erfindung betrifft ein Verfahren zum Festlegen eines Referenzstations-Aufstellpunktes zum Aufstellen einer Referenzstation im Umkreis einer sich im Gelände bewegenden selbstfahrenden Baumaschine, welche Korrektursignale an eine der selbstfahrenden Baumaschine zugeordnete DGNSS-Rover-Einheit sendet, wobei die DGNNS-Rover-Einheit auf der Grundlage der Satellitensignale eines globalen Navigationssatellitensystems und der Korrektursignale einer im Umkreis der Baumaschine an einem anderen Aufstellpunkt bereits im Gelände aufgestellten Referenzstation die Position eines Baumaschinen-Referenzpunktes auf der Baumaschine beschreibende Positionsdaten in einem von der Baumaschine unabhängigen Koordinatensystem bestimmt. Darüber hinaus betrifft die Erfindung ein Verfahren zur Bestimmung der Position eines Baumaschinen-Referenzpunktes auf einer sich im Gelände bewegenden Baumaschine in einem von der Baumaschine unabhängigen Koordinatensystem. Des Weiteren betrifft die Erfindung ein Positionsbestimmungssystem zur Bestimmung der Position eines Baumaschinen-Referenzpunktes auf einer selbstfahrenden Baumaschine in einem von der Baumaschine unabhängigen Koordinatensystem und ein Baumaschinensystem umfassend eine Baumaschine und ein Positionsbestimmungssystem. Unter selbstfahrenden Baumaschinen werden sämtliche Baumaschinen verstanden, die über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Straßenfräsmaschinen, Stabilisierer, Recycler, Gleitschalungsfertiger oder Straßenfertiger. Bei Straßenfräsmaschinen oder Recyclern umfasst die Arbeitseinrichtung eine mit Fräs- oder Schneidwerkzeugen bestückte Fräs-/Schneidwalze, mit der vom Gelände Material in einer vorgegebenen Arbeitsbreite abgetragen werden kann. Bei der Arbeitseinrichtung von Gleitschalungsfertigern handelt es sich um eine Vorrichtung zum Formen von fließfähigem Material, insbesondere Beton, mit welcher Baukörper unterschiedlicher Ausbildung, beispielsweise Leitwände oder Verkehrsinseln, hergestellt werden können. Die bekannten Straßenfertiger verfügen über eine Einbaubohle zum Einbau des Materials für den Straßenbelag. Bodenverdichter wie Straßenwalzen verfügen über wenigstens eine Verdichtungsvorrichtung, insbesondere eine Verdichterwalze, zur Verdichtung des Untergrundes.

Nachfolgend wird unter einem festzulegenden Referenzstations-Aufstellpunkt ein zu definierender Aufstellpunkt verstanden, an dem eine Referenzstation im Umkreis einer selbstfahrenden Baumaschine aufgestellt werden soll, die sich entlang eines vorgegebenen Pfades im Gelände bewegen soll oder bewegt. Unter einem vorgegebenen Pfad wird nicht verstanden, dass die Baumaschine autonom fahren muss. Die Baumaschine kann auch von dem Maschinenführer gesteuert werden. Ein festzulegender Referenzstations-Aufstellpunkt ist von einem bereits festgelegten Referenzstations-Aufstellpunkt zu unterscheiden, der beispielsweise bei der Planung bereits festgelegt worden ist und an dem bereits eine Referenzstation aufgestellt worden ist. Die bei der bereits festgelegten Aufstellpunkte der Referenzstation werden als vorgegebene Referenzstations-Aufstellpunkte bezeichnet. Unter einem aktuellen Referenzstations-Aufstellpunkt wird ein einziger Aufstellpunkt verstanden, an dem eine Referenzstation aufgestellt worden ist. Die Positionen der vorgegebenen Referenzstations-Aufstellpunkte können als Positionsdaten in einem Speicher als ein Positions-Datensatz gespeichert werden, um für das Bauvorhaben zur Verfügung zu stehen. Unter einem anderen Referenzstations-Aufstellpunkt wird ein bereits festgelegter Referenzstations-Aufstellpunkt verstanden.

Bei der Errichtung von Baukörpern auf der Geländeoberfläche oder bei der Veränderung des Geländes werden hohe Anforderungen an die Präzision der Bauausführung gestellt. Bei der Steuerung von selbstfahrenden Baumaschinen wird daher zunehmend eine Entlastung des Maschinenführers, der bei der Bauausführung mit einer Vielzahl von Aufgaben belastet ist, angestrebt. Daher kommen bei bekannten selbstfahrenden Baumaschinen Positionsbestimmungssysteme zum Einsatz, welche die Position eines Referenzpunktes auf der selbstfahrenden Baumaschine in einem von der Baumaschine unabhängigen Koordinatensystem bestimmen.

Unter der Bezeichnung GPS (Global Positioning System) ist ein Positionsbestimmungssystem bekannt, welches auf der Auswertung der Signallaufzeiten von Signalen mehrerer Satelliten beruht. Die Abkürzung GPS wird heute umgangssprachlich, zum Teil sogar fachsprachlich, als generische Bezeichnung oder pars pro toto für sämtliche Satellitennavigationssysteme benutzt, die korrekt unter dem Kürzel GNSS (Global Navigation(al) Satellite System) zusammengefasst werden (Wikipedia: GPS). Unter der Bezeichnung DGPS (Differential Global Positioning System) bzw. DGNSS ist ein Verfahren bekannt, welches durch das Ausstrahlen von Korrektursignalen (Bahn- und Zeitsystem) die Genauigkeit der GNSS-Positionsbestimmung steigert. Beim DGNSS können auch als Basisstationen bezeichnete stationäre Referenzstationen zum Einsatz kommen, mit denen sich aus der Abweichung der tatsächlichen und der empfangenen Position die tatsächlichen Laufzeiten der Signale für jeden Satelliten sehr genau bestimmen lassen. Die Differenzen der theoretischen und der tatsächlichen Signallaufzeiten werden an die DGNSS -Empfänger übertragen, welche ihre Position mit diesen Korrektursignalen korrigieren (Wikipedia: DGPS). Nachfolgend werden unter einer GPS-Rover-Einheit oder GNSS-Rover-Einheit auch eine DGPS oder DGNSS-Rover-Einheit oder umgekehrt verstanden, wobei die Begrifflichkeiten (D)GPS und (D)GNSS hierbei synonym verwendet werden.

Aus der DE 197 56 676 C1 ist eine Straßenfräsmaschine bekannt, welche über ein DGNSS zur Positionsbestimmung verfügt. Die Baumaschine weist eine DGNSS--Rover-Einheit zum Empfangen von Satellitensignalen eines globalen Navigationssatellitensystems und von Korrektursignalen einer Referenzstation auf, wobei die DGNSS--Rover-Einheit derart konfiguriert ist, dass auf der Grundlage der Satellitensignale und der Korrektursignale die Position eines Referenzpunktes auf der Baumaschine beschreibende Positionsdaten in einem von der Baumaschine unabhängigen Koordinatensystem bestimmt werden.

Die Referenzstation zum Senden der Korrektursignale an die DGNSS-Rover-Einheit wird zur Erhöhung der Genauigkeit der Positionsbestimmung im Umkreis der Baumaschine aufgestellt. Wenn sich die Baumaschine im Gelände bewegt, muss die Referenzstation umgesetzt werden, da die Reichweite für eine Funkverbindung zwischen der DGNSS-Rover-Einheit und der Referenzstation begrenzt ist und sich die Genauigkeit der Positionsbestimmung mit zunehmendem Abstand von Rover-Einheit und Referenzstation verringert.

Ein DGNSS setzt voraus, dass die exakte Position der Referenzstation im Gelände bekannt ist. Die exakte Position der Referenzstation wird auch als tatsächliche Referenzstations-Position bezeichnet. Die tatsächliche Referenzstations-Position kann mit klassischen Vermessungsverfahren bestimmt werden. In der Praxis wird die Referenzstation an bestimmten Referenzstations-Aufstellpunkten im Gelände aufgestellt, die bei der Baustellenplanung zuvor festgelegt worden sind und deren Positionsdaten bekannt sind. Diese vorgegebenen Positionsdaten werden bei der Einrichtung der Baustelle in die Referenzstation mittels einer Eingabeeinheit von Hand eingegeben. Eine erneute Dateneingabe ist immer dann erforderlich, wenn die Referenzstation umgesetzt wird oder eine weiteren Referenzstation aufgestellt wird. Dieses Vorgehen, erweist sich in der Praxis nicht nur als zeitaufwendig, sondern auch als fehleranfällig, da am jeweiligen Aufstellungspunkt die richtigen Positionsdaten eingegeben werden müssen. Die Bestimmung der exakten Koordinaten der im Gelände aufgestellten Referenzstation und die Übernahme dieser Koordinaten in eine Speichereinheit der Referenzstation wird nachfolgend als Initialisierung einer Referenzstation bezeichnet.

Ein Positionsbestimmungssystem zur Bestimmung der Position eines Referenzpunktes auf einer selbstfahrenden Baumaschine ist aus der DE 10 2022 124 484 A1 bekannt, welches über eine DGNSS-Rover-Einheit zum Empfangen von Satellitensignalen eines globalen Navigationssatellitensystems und von Korrektursignalen einer Referenzstation verfügt. Die Referenzstation ist derart eingerichtet, dass sie ihre eigene Referenzstations-Position selbst bestimmen kann. Da die von der Referenzstation selbst bestimmte Referenzstations-Position aber ungenau ist, wird der Referenzstation die tatsächliche Referenzstations-Position durch eine Initialisierung mitgeteilt.

Das Funktionsprinzip des bekannten Positionsbestimmungssystem beruht darauf, dass die Referenzstation an bestimmten Orten aufgestellt wird, deren Lage bekannt ist. Die Orte, an welchen die Referenzstation aufgestellt werden soll, wenn sich die Maschine entlang eines vorgegebenen Pfades, beispielsweise entlang der zu bearbeitenden Fahrbahn, bewegt, werden bei der Planung der Baustelle im Büro festgelegt. Beispielsweise können diese Orte geeignete Markierungen auf der Geländeoberfläche im Umkreis des Arbeitsbereichs der Baumaschine sein,

Die DE 10 2022 124 484 A1 schlägt zur Initialisierung der Referenzstation vor, einen die vorgegebenen Positionen einer Referenzstation beschreibenden Positions-Datensatz aus einer Speichereinheit auszulesen und die tatsächliche Referenzstations-Position auf der Grundlage eines Vergleichs der vorgegebenen Positionen der Referenzstation mit der von der Referenzstation bestimmten Referenzstations-Position zu ermitteln. Unter den vorgegebenen Positionen einer Referenzstationen werden die Orte im Gelände verstanden, deren Positionen bekannt sind und an denen die Referenzstation entlang des zu bearbeitenden Pfades aufgestellt werden sollen. Der Vergleich erlaubt eine automatisierte Zuordnung der betreffenden Koordinatenwerte, so dass die Koordinatenwerte der tatsächlichen Position der Referenzstation aus dem Positions-Datensatz ausgewählt werden können, ohne dass zusätzliche Eingaben auf der Baustelle erforderlich sind. Dadurch wird die Initialisierung vereinfacht und fehlerhafte Eingaben werden ausgeschlossen.

In der Praxis können sich die in einem Planungsbüro zuvor festgelegten Punkte auf der Geländeoberfläche, an denen eine Referenzstation aufgestellt werden soll, nicht als optimale Referenzstations-Aufstellpunktes erweisen oder eine Referenzstation soll an einem anderen Punkt auf der Geländeoberfläche aufgestellt werden. Die Vermessung eines neuen Aufstellpunktes mit einem klassischen Vermessungsverfahren im Nachhinein ist in der Praxis aber meist aufwendig.

Der Erfindung liegt die Aufgabe zugrunde, ein Verfahren zum Festlegen eines Referenzstations-Aufstellpunktes zum Aufstellen einer Referenzstation im Umkreis einer sich im Gelände bewegenden selbstfahrenden Baumaschine anzugeben, welches in der Praxis die Einrichtung einer Baustelle erleichtert und die Gefahr einer fehlerhaften Dateneingabe verringert. Eine weitere Aufgabe der Erfindung ist ein in der Praxis die Einrichtung einer Baustelle erleichterndes und die Gefahr einer fehlerhaften Dateneingabe verringerndes Verfahren zur Bestimmung der Position eines Baumaschinen-Referenzpunktes auf einer sich im Gelände bewegenden Baumaschine anzugeben.

Darüber hinaus ist eine Aufgabe der Erfindung ein in der Praxis die Einrichtung einer Baustelle erleichterndes und die Gefahr einer fehlerhaften Dateneingabe verringerndes Positionsbestimmungssystem zur Bestimmung der Position eines Baumaschinen-Referenzpunktes auf einer selbstfahrenden Baumaschine und ein Baumaschinensystem umfassend eine Baumaschine und ein Positionsbestimmungssystem bereitzustellen.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Das erfindungsgemäße Verfahren zum Festlegen eines Referenzstations-Aufstellpunktes ist zum Aufstellen einer Referenzstation bestimmt, welche Korrektursignale an eine der selbstfahrenden Baumaschine zugeordnete DGNSS-Rover-Einheit sendet, wobei die DGNSS-Rover-Einheit auf der Grundlage der Satellitensignale eines globalen Navigationssatellitensystems und der Korrektursignale einer im Umkreis der Baumaschine an einem anderen Aufstellpunkt bereits im Gelände aufgestellten Referenzstation die Position eines Baumaschinen-Referenzpunktes auf der Baumaschine beschreibende Positionsdaten in einem von der Baumaschine unabhängigen Koordinatensystem bestimmt.

Das erfindungsgemäße Verfahren zeichnet sich dadurch aus, dass die Baumaschine zunächst bis zu einem Wegpunkt im Gelände bewegt wird, in dessen Umkreis eine Referenzstation aufgestellt werden soll. Dieser Wegpunkt muss nicht auf dem gewünschten Referenzstations-Aufstellpunkt liegen, sondern kann in dessen Nähe liegen. An diesem Wegpunkt werden die Position des Baumaschinen-Referenzpunktes auf der Baumaschine beschreibende Positionsdaten in einem von der Baumaschine unabhängigen Koordinatensystem mittels der DGNSS-Rover-Einheit auf der Grundlage der Satellitensignale eines globalen Navigationssatellitensystems und der Korrektursignale der im Umkreis der Bodenbearbeitungsmaschine bereits im Gelände aufgestellten Referenzstation bestimmt.

Nunmehr wird ein in einer vorgegebenen räumlichen Beziehung zu dem Baumaschinen-Referenzpunkt auf der Baumaschine stehender Punkt auf der Geländeoberfläche als der Referenzstations-Aufstellpunkt, an der die Referenzstation aufgestellt werden soll, festgelegt. In diesem Zusammenhang werden unter der Festlegung des Punktes auf der Geländeoberfläche sämtliche Maßnahmen verstanden, mit denen die Lage eines Punktes im Gelände signalisiert wird. Der Punkt im Gelände kann beispielsweise mit geeigneten Mitteln nur vorläufig oder dauerhaft markiert werden.

Daraufhin werden die Position des Referenzstations-Aufstellpunktes beschreibende Positionsdaten in einem von der Baumaschine unabhängigen Koordinatensystem auf der Grundlage der die Position des Baumaschinen-Referenzpunktes auf der Baumaschine an diesem Wegpunkt beschreibenden Positionsdaten und der vorgegebenen räumlichen Beziehung zwischen dem Baumaschinen-Referenzpunkt auf der Baumaschine und dem als Referenzstations-Aufstellpunkt auf der Geländeoberfläche festgelegten Punkt bestimmt.

Die die Position des Referenzstations-Aufstellpunktes beschreibenden Positionsdaten werden dann in einer Speichereinheit gespeichert. Aus der Speichereinheit können die Positionsdaten für eine weitere Datenverarbeitung jederzeit ausgelesen werden. Folglich stehen die Daten insbesondere für die Initialisierung der an diesem Aufstellpunkt aufzustellenden Referenzstation zur Verfügung, ohne dass es zuvor einer konventionellen Vermessung des Punktes von einem Geodäten bedurft hätte. Der ermittelte Referenzstations-Aufstellpunkt wird somit zu einem bereits festgelegten Referenzstations-Aufstellpunkt.

In diesem Zusammenhang werden unter einer Speichereinheit sämtliche Datenspeicher verstanden, auf denen Daten gespeichert werden können und von denen die Daten ausgelesen werden können, beispielsweise die bekannten elektronischen Speicher (Halbleiterspeicher) und Speichermedien, welche mit elektronischen Geräten gelesen oder beschrieben werden können. Die Speichereinheit kann Teil der Baumaschine oder der Referenzstation oder ein externer Speicher (Cloud-Speicher) sein.

Die nachfolgend beschriebenen Ausführungsformen der Erfindung können eines oder mehrere der nachfolgend genannten Merkmale oder Merkmalskombinationen umfassen. Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Das erfindungsgemäße Verfahren zum Festlegen eines Referenzstations-Aufstellpunktes ist zum Aufstellen einer Referenzstation im Umkreis einer sich im Gelände bewegenden selbstfahrenden Baumaschine bestimmt. Die Festlegung des Referenzstations-Aufstellpunktes auf der Geländeoberfläche kann mittels eines an einer Kette oder einer Schnur hängenden Lotkörpers mit einer abwärts zeigenden Spitze erfolgen, wobei die Kette oder Schnur an der Baumaschine an einem Befestigungspunkt befestigt ist, welcher in einer vorgegebenen räumlichen Beziehung zu dem Baumaschinen-Referenzpunkt auf der Baumaschine steht. Die Spitze des Lotkörpers zeigt dann auf den Punkt auf der Geländeoberfläche, an dem die Referenzstation aufgestellt werden soll. Um den Punkt im Gelände einfacher und genauer festlegen zu können, wird die Baumaschine vorzugsweise aus einer angehobenen Position, in der sich die Spitze des Lotkörpers oberhalb der Geländeoberfläche befindet, in eine abgesenkte Position abgesenkt, während die Spitze des Lotkörpers auf den Referenzstations-Aufstellpunkt zeigt, welcher sich mit geeigneten Mitteln dauerhaft markieren lässt. Die Baumaschine kann so weit abgesenkt werden, bis die Spitze des Lotkörpers den Boden berührt. Ein Absenken der Baumaschine erübrigt sich aber dann, wenn sich die Spitze des Lotkörpers bereits unmittelbar oberhalb der Geländeoberfläche befindet.

Der Referenzstations-Aufstellpunkt auf der Geländeoberfläche kann auch mittels eines Messstabes mit einer abwärts zeigenden Spitze festgelegt werden, wobei der Messstab an der Baumaschine an einem Befestigungspunkt in Richtung seiner Längsachse verschiebbar befestigt ist, welcher in einer vorgegebenen räumlichen Beziehung zu dem Baumaschinen-Referenzpunkt auf der Baumaschine steht. Zur Festlegung des Referenzstations-Aufstellpunkt kann der Messstab aus einer angehobenen Position, in der sich die Spitze des Messstabes oberhalb der Geländeoberfläche befindet, in eine abgesenkte Position abgesenkt werden, während die Spitze des Messtabes auf den Referenzstations-Aufstellpunkt zeigt. Wenn der Messstab bis auf den Boden abgesenkt wird, kann mit dessen Spitze der Referenzstations-Aufstellpunkt auf der Geländeoberfläche zumindest vorläufig markiert werden.

Eine weitere Alternative ist die Festlegung des Referenzstations-Aufstellpunktes auf der Geländeoberfläche mittels eines Lasers, wobei der Laser an der Baumaschine an einem Befestigungspunkt befestigt ist, welcher in einer vorgegebenen räumlichen Beziehung zu dem Baumaschinen-Referenzpunkt (R) auf der Baumaschine steht. Der Laserstrahl zeigt dann auf den Referenzstations-Aufstellpunkt, der sich mit geeigneten Mitteln dauerhaft markieren lässt.

Die dauerhafte Markierung des Referenzstations-Aufstellpunktes kann mit den bekannten Vermarkungselementen, insbesondere mit einem Erdnagel, erfolgen. Alternativ oder zusätzlich kann auf dem Untergrund eine farbliche Markierung, beispielsweise mittels Sprühfarbe, erfolgen.

Die vorgegebene räumliche Beziehung, in welcher der Referenzstations-Aufstellpunkt zu dem Baumaschinen-Referenzpunkt (R) auf der Baumaschine steht, kann eine beliebige räumliche Beziehung sein. In der Praxis wird aber angestrebt, eine möglichst einfache räumliche Beziehung zu schaffen. Dies kann dadurch erreicht werden, dass die Baumaschine zur Festlegung des Referenzstations-Aufstellpunktes auf der Geländeoberfläche horizontal oder parallel zum Boden ausgerichtet wird.

Bei der Ausführungsform mit dem an einer Kette oder einem Seil hängenden Lotkörper erweist sich eine horizontale Ausrichtung der Baumaschine als optimal, da bei horizontaler Ausrichtung die Kette oder das Seil mit dem Lotkörper und eine Querebene des Maschinenrahmens einen rechten Winkel einschließen. Dadurch ergeben sich relativ einfache geometrische Beziehungen zwischen Baumaschinen-Referenzpunkt, Befestigungspunkt und der den Referenzstations-Aufstellpunkt festlegenden Projektion des Befestigungspunktes auf die Bodenoberfläche.

Bei der Ausführungsform mit dem Messstab erweist sich eine zur Geländeoberfläche parallele Ausrichtung der Baumaschine als optimal, da bei bodenparalleler Ausrichtung die Längsachse des Messstabes und die Bodenoberfläche einen rechten Winkel einschließen.

Wenn die Neigung der Baumaschine gegenüber der Horizontalen bekannt ist, können die die Position des Referenzstations-Aufstellpunktes beschreibenden Positionsdaten aber auch ohne eine gezielte Ausrichtung der Baumaschine bestimmt werden.

Das erfindungsgemäße Verfahren zur Bestimmung der Position eines Baumaschinen-Referenzpunktes auf einer sich im Gelände bewegenden Baumaschine in einem von der Baumaschine unabhängigen Koordinatensystem sieht das Bereitstellen einer Referenzstation im Umkreis der Baumaschine und einer DGNSS-Rover-Einheit vor, welche auf der Grundlage der Satellitensignale eines globalen Navigationssatellitensystems und von Korrektursignalen der im Umkreis der Baumaschine aufgestellten Referenzstation die Position eines Referenzpunktes auf der Baumaschine beschreibende Positionsdaten in einem von der Baumaschine unabhängigen Koordinatensystem bestimmt, wobei die Korrektursignale auf der Grundlage der tatsächlichen Referenzstations-Position und der von der Referenzstation bestimmten Referenzstations-Position berechnet werden.

Unter einer DGNSS-Rover-Einheit wird eine mobile Einheit verstanden, welche die Position der selbstfahrenden Baumaschine bestimmen kann, wenn die Rover-Einheit der Baumaschine zugeordnet wird. Die DGNSS-Rover-Einheit kann mehrere Komponenten umfassen, beispielsweise zumindest eine GPS-Antenne und eine Rechen- und Auswerteeinheit, wobei die GPS-Antenne an dem Baumaschinen-Referenzpunkt angeordnet wird, so dass die GPS-Antenne die Satellitensignale empfangen kann. Die DGNSS-Rover-Einheit kann auch zwei GPS-Antennen umfassen, um nicht nur die Position der Baumaschine, sondern auch deren Orientierung im Gelände bestimmen zu können.

Darüber hinaus sieht das erfindungsgemäße Verfahren die Festlegung eines Referenzstations-Aufstellpunktes, an dem die Referenzstation aufgestellt werden soll, nach dem oben beschriebenen erfindungsgemäßen Verfahren und die Aufstellung der Referenzstation an dem mit dem oben beschriebenen Verfahren festgelegten Referenzstations-Aufstellpunkt vor, um die Position des Baumaschinen-Referenzpunktes mit hoher Genauigkeit bestimmen zu können, während sich die Baumaschine entlang eines vorgegebenen Pfades bewegt.

In der Praxis werden die Referenzstations-Aufstellpunkte grundsätzlich von einem Geodäten im Gelände zuvor vermessen und die Festlegung eines Referenzstations-Aufstellpunktes nach dem oben beschriebenen erfindungsgemäßen Verfahren kommt nur dann in Betracht, wenn während der Bauarbeiten ein neuer Referenzpunkt festgelegt werden soll. Grundsätzlich wäre es aber auch möglich, nur den ersten Referenzstations-Aufstellpunkt entlang des Pfades durch einen Geodäten vermessen zu lassen und alle Aufstellpunkte nach dem erfindungsgemäßen Verfahren zu bestimmen. Allerdings besteht dann das vermeidbare Risiko einer Fehlerfortpflanzung.

Nach der Bestimmung der Position eines neuen Referenzstations-Aufstellpunktes gemäß dem erfindungsgemäßen Verfahren ohne erneute Vermessung kann die Position dieses Referenzstations-Aufstellpunktes zusammen mit den anderen vorgegebenen und von einem Geodäten vermessenen Positionen in einer Speichereinheit gespeichert werden. Die erneute Initialisierung der neu aufzustellenden Referenzstation kann dann auf der Grundlage eines Vergleichs von in einer Speichereinheit gespeicherten Positionsdaten, die die Positionen von vorgegebenen Referenzstations-Aufstellpunkten beschreiben, mit der von der Referenzstation bestimmten Referenzstations-Position nach dem in der DE 10 2022 124 484 A1 beschriebenen Verfahren ermittelt werden.

Das erfindungsgemäße Positionsbestimmungssystem zur Bestimmung der Position eines Baumaschinen-Referenzpunktes auf einer selbstfahrenden Baumaschine in einem von der Baumaschine unabhängigen Koordinatensystem umfasst eine der Baumaschine zuzuordnende DGNSS-Rover-Einheit und eine im Umkreis der Baumaschine aufzustellende Referenzstation.

Die DGNSS-Rover-Einheit ist derart konfiguriert, dass diese die Satellitensignale eines globalen Navigationssatellitensystems und Korrektursignale einer im Umkreis der selbstfahrenden Baumaschine aufzustellenden Referenzstation empfängt und auf der Grundlage der Satellitensignale und der Korrektursignale die Position eines Baumaschinen-Referenzpunktes auf der Baumaschine beschreibende Positionsdaten in einem von der Baumaschine unabhängigen Koordinatensystem bestimmt.

Die im Umkreis der Baumaschine aufzustellende Referenzstation ist derart konfiguriert, dass diese Korrektursignale an die DGNSS-Rover-Einheit sendet, wobei die Korrektursignale auf der Grundlage der tatsächlichen Referenzstations-Position und der von der Referenzstation bestimmten Referenzstations-Position berechnet werden.

Das erfindungsgemäße Positionsbestimmungssystem zeichnet sich dadurch aus, dass das Positionsbestimmungssystem eine Referenzstations-Aufstellpunkt-Festlegungseinrichtung umfasst, welche derart ausgebildet ist, dass ein Punkt auf der Geländeoberfläche, welcher in einer vorgegebenen räumlichen Beziehung zu dem Baumaschinen-Referenzpunkt auf der Baumaschine steht, als ein Referenzstations-Aufstellpunkt festlegbar ist. Die Referenzstations-Aufstellpunkt-Festlegungseinrichtung erlaubt die nachträgliche Festlegung eines Referenzstations-Aufstellpunktes ohne erneute Vermessung von einem Geodäten.

Die Referenzstations-Aufstellpunkt-Festlegungseinrichtung kann einen an einer Kette oder einer Schnur hängenden Lotkörper mit einer abwärts zeigenden Spitze oder einen Messstab mit einer abwärts zeigenden Spitze oder einen Laser umfassen. Darüber hinaus kann die Referenzstations-Aufstellpunkt-Festlegungseinrichtung ein Vermarkungselement zur Markierung des Referenzstations-Aufstellpunktes, insbesondere einen Erdnagel, umfassen.

Eine Ausführungsform des erfindungsgemäßen Positionsbestimmungssystems sieht vor, dass die DGNSS-Rover-Einheit derart konfiguriert ist, dass die Position des Referenzstations-Aufstellpunktes beschreibende Positionsdaten in einem von der Baumaschine unabhängigen Koordinatensystem auf der Grundlage von die Position des Baumaschinen-Referenzpunktes auf der Baumaschine an einem Wegpunkt beschreibenden Positionsdaten und der vorgegebenen räumlichen Beziehung zwischen dem Baumaschinen-Referenzpunkt auf der Baumaschine und dem als Referenzstations-Aufstellpunkt auf der Geländeoberfläche festgelegten Punkt bestimmt werden. Zur Festlegung und Bestimmung der Position des Referenzstations-Aufstellpunktes braucht die Baumaschine somit nur an einen Ort in der Nähe des gewünschten Punktes bewegt zu werden.

Die DGNSS-Rover-Einheit kann derart konfiguriert sein, dass die Position des Referenzstations-Aufstellpunktes, welcher in einer vorgegebenen räumlichen Beziehung zu dem Baumaschinen-Referenzpunkt auf der Baumaschine steht, auf der Grundlage der Satellitensignale und der Korrektursignale einer im Umkreis der Baumaschine bereits aufgestellten Referenzstation ermittelt wird.

Eine weitere Ausführungsform des erfindungsgemäßen Positionsbestimmungssystems sieht vor, dass in einer Speichereinheit Positionsdaten gespeichert sind, die die Positionen von vorgegebenen Referenzstations-Aufstellpunkten beschreiben, und dass das Positionsbestimmungssystem derart konfiguriert ist, dass zur Initialisierung einer an einem Referenzstations-Aufstellpunkt aufzustellenden Referenzstation die die Positionen der Referenzstations-Aufstellpunkte beschreibenden Positionsdaten aus der Speichereinheit ausgelesen werden und die tatsächliche Referenzstations-Position auf der Grundlage eines Vergleichs der die vorgegebenen Referenzstations-Aufstellpunkte beschreibenden Positionsdaten mit der von der Referenzstation bestimmten Referenzstations-Position ermittelt wird.

Der Vergleich erlaubt eine automatisierte Zuordnung der betreffenden Koordinatenwerte, so dass die Koordinatenwerte der tatsächlichen Position der Referenzstation aus dem Positions-Datensatz ausgewählt werden können, ohne dass zusätzliche Eingaben auf der Baustelle erforderlich sind. Dadurch wird die Initialisierung vereinfacht und fehlerhafte Eingaben werden ausgeschlossen. In diesem Zusammenhang wird unter einem Vergleich ein in Beziehung setzen der einzelnen Positionen verstanden, um Abweichungen der bekannten, exakten Positionen von den gemessenen, ungenauen Positionen feststellen zu können, so dass die Werte einander richtig zugeordnet werden können. Der Vergleich kann auf der Grundlage bekannter Rechenoperationen oder Algorithmen erfolgen.

Das erfindungsgemäße Baumaschinensystem umfasst eine Baumaschine und das erfindungsgemäße Positionsbestimmungssystem. Unter dem Baumaschinensystem wird also eine Anordnung von Baumaschine und Positionsbestimmungssystem verstanden.

Die Referenzstations-Aufstellpunkt-Festlegungseinrichtung kann umfassen:

einen an einer Kette oder einer Schnur hängenden Lotkörpers mit einer abwärts zeigenden Spitze, wobei die Kette oder Schnur an einem an der Baumaschine vorgesehenen Befestigungspunkt befestigt ist, welcher in einer vorgegebenen räumlichen Beziehung zu dem Baumaschinen-Referenzpunkt auf der Baumaschine steht, oder

einen Messstab mit einer abwärts zeigenden Spitze, wobei der Messstab an der Baumaschine an einem Befestigungspunkt in Richtung seiner Längsachse verschiebbar befestigt ist, welcher in einer vorgegebenen räumlichen Beziehung zu dem Baumaschinen-Referenzpunkt (R) auf der Baumaschine (I) steht, oder

einen Laser, wobei der Laser an der Baumaschine an einem Befestigungspunkt befestigt ist, welcher in einer vorgegebenen räumlichen Beziehung zu dem Baumaschinen-Referenzpunkt (R) auf der Baumaschine steht.

Grundsätzlich ist jede Vorrichtung, deren räumliche Beziehung zu dem Baumaschinen-Referenzpunkt auf der Baumaschine ermittelbar ist, als Referenzstations-Aufstellpunkt-Festlegungseinrichtung geeignet. Hierzu zählen auch relativ zur Baumaschine bewegliche Vorrichtungen, beispielsweise schwenkbare Ausleger, soweit die Relativbewegung relativ zum Baumaschinen-Referenzpunkt erfassbar ist.

Da die Abmessungen der Baumaschine bekannt sind, kann auch die räumliche Beziehung zwischen dem Baumaschinen-Referenzpunkt und der Position des Referenzstations-Aufstellpunktes bestimmt werden. Diese vorgegebene räumliche Beziehung kann auf der Grundlage des Abstandes des Befestigungspunktes von dem Baumaschinen-Referenzpunkt in einer X-Richtung eines kartesischen Koordinatensystems und des Abstandes des Befestigungspunktes von dem Baumaschinen-Referenzpunkt in einer Y-Richtung des kartesischen Koordinatensystems und des Abstandes des Befestigungspunktes von der Bodenoberfläche in einer Z-Richtung des kartesischen Koordinatensystems bestimmt wird. Das kartesischen Koordinatensystems ist vorzugsweise ein auf die Baumaschine bezogenes Koordinatensystem, wobei sich die Y-Achse in Längsrichtung und die X-Achse in Querrichtung der Baumaschine erstrecken kann. Dieses Koordinatensystem kann derart ausgerichtet werden, dass der Abstand in einer X- und Y-Richtung nicht von der Höhe des Baumaschinen-Referenzpunktes über dem Boden abhängig ist.

Bei einer weiteren Ausführungsform des erfindungsgemäßen Baumaschinensystems weist die Baumaschine einen Maschinenrahmen mit einem nach unten offenen Walzengehäuse auf, in dem eine Arbeitswalze zur Bearbeitung des Bodens angeordnet ist, wobei das Walzengehäuse zumindest an einer Seite von einem Kantenschutz verschlossen ist, welcher am Maschinenrahmen zwischen einer gegenüber der Bodenoberfläche angehobenen Position und einer auf die Bodenoberfläche abgesenkten Position verstellbar ist, in welcher der Kantenschutz mit seiner Unterkante auf der Bodenoberfläche aufliegt. Die Baumaschine weist eine die Höhenstellung des Kantenschutzes erfassende Messeinrichtung auf. Bei dieser Ausführungsform ist die DGNSS-Rover-Einheit derart konfiguriert, dass der Abstand des Befestigungspunktes von der Bodenoberfläche in der Z-Richtung des kartesischen Koordinatensystems auf der Grundlage der Höheninformation der Messeinrichtung bestimmt wird. Eine derartige Bestimmung des Abstandes erweist sich insbesondere bei der Ausführungsform mit dem Laser als vorteilhaft. Bei der Ausführungsform mit der Kette oder dem Seil und dem Lotkörper ist es grundsätzlich auch möglich, den Abstand in der Z-Richtung allein auf der Grundlage der bekannten Abmessungen der Baumaschine sowie der Länge der Kette oder des Seils und des Lotkörpers zu bestimmen, wenn die Baumaschine abgesenkt wird, bis die Spitze des Lotkörpers auf die Bodenoberfläche trifft. Bei der Ausführungsform mit dem Messstab kann der Messstab verschoben und/oder die Baumaschine abgesenkt werden, bis die Spitze des Messstabs auf die Bodenoberfläche trifft.

Nachfolgend werden mehrere Ausführungsbeispiele der Erfindung unter Bezugnahme auf die Zeichnungen im Einzelnen beschrieben.

Es zeigen:

| | |
|---|---|
| Fig. 1 | eine selbstfahrende Baumaschine in der Seitenansicht, |
| Fig. 2 | die selbstfahrende Baumaschine von Fig. 1 in der Draufsicht, |
| Fig. 3 | ein Ausführungsbeispiel des Positionsbestimmungssystem zur Bestimmung der Position eines Referenzpunktes auf der Baumaschine, |
| Fig. 4 | die sich entlang eines Pfades bewegende selbstfahrende Baumaschine, wobei die |

Referenzstation an einer ersten Position aufgestellt ist,

Fig. 5 die sich entlang eines Pfades bewegende selbstfahrende Baumaschine, wobei die Referenzstation an einer zweiten Position aufgestellt ist,

Fig. 6 die sich entlang eines Pfades bewegende selbstfahrende Baumaschine, wobei die Referenzstation an einer dritten Position aufgestellt ist,

Fig. 7 die sich entlang eines Pfades bewegende selbstfahrende Baumaschine, wobei die Referenzstation an einer vierten Position aufgestellt ist,

Fig. 8 ein weiteres Ausführungsbeispiel des Positionsbestimmungssystem zur Bestimmung der Position eines Referenzpunktes auf der Baumaschine,

Fig. 9 ein weiteres Ausführungsbeispiel des Positionsbestimmungssystem zur Bestimmung der Position eines Referenzpunktes auf der Baumaschine,

Fig. 10 eine Rückansicht eines Ausführungsbeispiels der Baumaschine, in der die Referenzstations-Aufstellpunkt-Festlegungseinrichtung dargestellt ist,

Fig. 11 die Baumaschine von Fig. 10 in der Seitenansicht,

Fig. 12 ein weiteres Ausführungsbeispiel der Referenzstations-Aufstellpunkt-Festlegungseinrichtung mit einem Laser,

Fig. 13A ein weiteres Ausführungsbeispiel der Referenzstations-Aufstellpunkt-Festlegungseinrichtung mit einem Messstab, wobei der Messstab sich in der angehobenen Position befindet und

Fig. 13B ein weiteres Ausführungsbeispiel der Referenzstations-Aufstellpunkt-Festlegungseinrichtung mit einem Messstab, wobei der Messstab sich in der abgesenkten Position befindet.

Die Figuren 1 und 2 zeigen in der Seitenansicht und der Draufsicht als Beispiel für eine selbstfahrende Baumaschine I eine Straßenfräsmaschine zum Abfräsen von Straßenbelägen, bei der es sich um eine Frontlader-Straßenfräsmaschine handelt.

Die Baumaschine I verfügt über einen von einem Fahrwerk 1 getragenen Maschinenrahmen 2, an dem eine Arbeitseinrichtung 3 angeordnet ist, mit der die für die Baumaßnahme erforderlichen Arbeiten durchgeführt werden können. Die Arbeitseinrichtung 3 weist eine in Fig. 1 nur andeutungsweise dargestellte Fräswalze 4 auf, die in einem nach unten offenen Fräswalzengehäuse 5 angeordnet ist. Das Fräswalzengehäuse 5 ist an beiden Seiten von einem Kantenschutz 50 verschlossen, welcher am Maschinenrahmen 2 zwischen einer gegenüber der Bodenoberfläche B angehobenen Position und einer gegenüber der Bodenoberfläche abgesenkten Position verstellbar ist. Während der Fräsarbeiten liegt der Kantenschutz 50 mit seiner Unterkante auf der Bodenoberfläche B auf. Für die Verstellung des Kantenschutzes 50 sind zwei Kolben-Zylinder-Anordnungen 51, 52 vorgesehen. Darüber hinaus ist eine die Höhenstellung des Kantenschutzes 50 erfassende in den Figuren 1 und 2 nicht dargestellte Messeinrichtung vorgesehen, die den Kolben-Zylinder-Anordnungen 51, 52 zugeordnete Messgeber umfassen kann, die eine Höheninformation liefern.

Oberhalb des Fräswalzengehäuses 5 befindet sich am Maschinenrahmen der Fahrstand 6 mit einem Bedienpult 7 für den Maschinenführer. Das Bedienpult 7 kann einen Touchscreen 8 aufweisen, auf dem Bedienfelder (Button) dargestellt werden. Das abgefräste Material wird mit einer Fördereinrichtung 9 abgeführt.

Die selbstfahrende Baumaschine I kann in Arbeitsrichtung A ein vorderes linkes Laufwerk 10A und ein vorderes rechtes Laufwerk 10B und ein hinteres linkes Laufwerk 11A und ein hinteres rechtes Laufwerk 11B aufweisen, denen eine in Arbeitsrichtung A vordere, linke und rechte Hubeinrichtung 12A, 12B und hintere, linke und rechte Hubeinrichtung 13A, 13B zugeordnet sind, so dass durch Einfahren bzw. Ausfahren der Hubeinrichtungen die Höhe und Neigung des Maschinenrahmens 2 gegenüber der Bodenoberfläche B verändert werden kann.

Die Steuerung der Baumaschine I erfolgt mit einer nur schematisch dargestellten Steuereinrichtung 53 in Abhängigkeit von Baumaschinen-Positionsdaten, die die Position eines Referenzpunktes R auf der Baumaschine in einem von der Baumaschine unabhängigen Koordinatensystem (X, Y, Z) beschreiben. Zur Bestimmung der Position eines Referenzpunktes R auf der Baumaschine I ist ein Positionsbestimmungssystem II vorgesehen, dessen Aufbau und Funktion nachfolgend im Einzelnen beschrieben wird.

Fig. 3 zeigt eine vereinfachte schematische Darstellung des Positionsbestimmungssystems II, das eine GNSS-Rover-Einheit 14 und eine Referenzstation 15 umfasst. Die GNSS-Rover-Einheit 14 ist an der Baumaschine I vorgesehen, so dass sich die GNSS-Rover-Einheit 14 mit der Baumaschine I im Gelände bewegt, während die Referenzstation 15 im Umkreis der Baumaschine aufgestellt wird. Die Anordnung von Baumaschine I und Positionsbestimmungssystem II wird auch als Baumaschinensystem III bezeichnet (Figuren 4 bis 7).

Die Figuren 4 bis 7 zeigen die Bewegung der Baumaschine I, insbesondere Straßenfräsmaschine, im Gelände entlang eines vorgegebenen Pfades 16, insbesondere einer Straße. In den Figuren 4 bis 7 sind die möglichen Aufstellorte für die Referenzstation mit einem Kreuz gekennzeichnet, an denen die Referenzstation 15 aufgestellt werden kann. Diese Aufstellorte werden grundsätzlich bei der Planung der Baustelle vorgegeben und können mit geeigneten Vermarkungselementen gekennzeichnet sein, welche sich vor Ort leicht auffinden lassen. Nachfolgend werden diese Aufstellorte auch als Referenzstations-Aufstellpunkte bezeichnet.

Während sich die Baumaschine I entlang des Pfades 16 bewegt, wird die Referenzstation 15 mehrfach umgesetzt, so dass sich die Referenzstation immer in einem Umkreis 17 der Baumaschine I befindet, welcher einen bestimmten Radius nicht überschreitet der grundsätzlich sowohl von Baumaschine I, Referenzstation 15 und den örtlichen Bedingungen abhängt. Die Positionen P1(X1, Y1, Z1), P2(X2, Y2, Z2), P3(X3, Y3, Z3), P4(X4, Y4, Z4), PN(XN, YN, ZN) der Referenzstations-Aufstellpunkte werden durch Koordinatenwerte in einem von der Baumaschine unabhängigen Koordinatensystem beschrieben. Diese Koordinatenwerte können X, Y, Z Koordinatenwerte eines kartesischen Koordinatensystems sein. Zur Veranschaulichung sind die X, Y, Z-Koordinatenwerte für die einzelnen Positionen P1(X1, Y1, Z1), P2(X2, Y2, Z2), P3(X3, Y3, Z3), P4(X4, Y4, Z4), PN(XN, YN, ZN) jeweils in einer Tabelle dargestellt. Diese Koordinatenwerte bilden einen Positions-Datensatz PD, der die vorgegebenen Positionen der Referenzstations-Aufstellpunkte beschreibt.

Die DGNSS-Rover-Einheit 14 umfasst mindestens eine GPS-Antenne 14A die an dem Referenzpunkt R der Baumaschine I angeordnet ist, eine Rechen- und Auswerteeinheit 18 und eine bidirektionale Sende- und Empfangseinheit 19 (Fig. 3). Die Referenzstation 15 weist eine GPS-Antenne 20, eine Rechen- und Auswerteeinheit 21 und eine bidirektionale Sende- und Empfangseinheit 22 auf. DGNSS-Rover-Einheit 14 und Referenzstation 15 kommunizieren mittels der Sende- und Empfangseinheiten 19, 22, die stellvertretend für die bekannten Übertragungsstrecken stehen sollen, die nach den bekannten Übertragungsverfahren arbeiten können (RF-Sender/Empfänger, WLAN, Bluetooth, etc.).

Die GPS-Antenne 20 der Referenzstation 15 empfängt die Satellitensignale mehrerer Satelliten wenigstens eines Satellitennavigationssystems S, wobei deren Rechen- und Auswerteeinheit 21 derart konfiguriert ist, dass aus den Satellitensignalen die Position P1'(X1', Y1', Z1'), P2'(X2', Y2', Z2'), P3'(X3', Y3', Z3'), P4'(X4', Y4', Z4'), PN'(XN', YN', ZN') der Referenzstation 15 mit einer dem GPS-System entsprechenden Genauigkeit bestimmt wird. Diese Position wird als die von der Referenzstation bestimmte oder gemessene oder empfangene Referenzstations-Position P1', P2', P3', P4' bezeichnet. Die Rechen- und Auswerteeinheit 21 der Referenzstation 15 ist weiterhin derart konfiguriert, dass Korrektursignale nach den bekannten Verfahren auf der Grundlage der tatsächlichen Referenzstations-Position P1(X1, Y1, Z1), P2(X2, Y2, Z2), P3(X3, Y3, Z3), P4(X4, Y4, Z4), PN(XN, YN, ZN) und der gemessenen Referenzstations-Position P1'(X1', Y1', Z1'), P2'(X2', Y2', Z2'), P3(X3', Y3', Z3'), P4(X4', Y4', Z4'), PN'(XN', YN', ZN') berechnet werden, wozu neben der gemessenen Referenzstations-Position noch die tatsächliche Referenzstations-Position bekannt sein muss. Diese entspricht der bekannten Position des vorgegebenen Referenzstations-Aufstellpunktes.

Die DGNSS-Rover-Einheit 14 empfängt ebenfalls die Satellitensignale mehrerer Satelliten eines globalen Navigationssatellitensystems S mittels der GPS-Antenne 14A. Darüber hinaus empfängt die DGNSS-Rover-Einheit 14 die Korrektursignale der Referenzstation 15 mittels der Sende-Empfangseinheit 19. Die Rechen- und Auswerteeinheit 18 der GNSS-Rover-Einheit 14 ist derart konfiguriert, dass nach den bekannten Verfahren auf der Grundlage der Satellitensignale und der Korrektursignale die (genaue) Position des Referenzpunktes R auf der Baumaschine I beschreibende Positionsdaten in dem von der Baumaschine unabhängigen Koordinatensystem (X, Y, Z) mit einer höheren Genauigkeit bestimmt wird.

Die Rechen- und Auswerteeinheit 18 der DGNSS-Rover-Einheit 14 und die Rechen- und Auswerteeinheit 21 der Referenzstation 15 können beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen. Es ist auch eine Kombination der verschiedenen Komponenten möglich.

Fig. 3 zeigt ein Ausführungsbeispiel, bei dem die Rechen- und Auswerteeinheit 18 der DGNSS-Rover-Einheit 14 mit einer externen Speichereinheit 23 zusammenwirkt, in welcher der die vorgegebenen Positionen der Referenzstations-Aufstellpunkte der Referenzstationen beschreibender Positions-Datensatz PD gespeichert ist. Diese Speichereinheit 23 kann auch der Datenspeicher einer Server-Einheit IV (Dateiserver) sein, wobei die Rechen- und Auswerteeinheit 18 mit dem Dateiserver ein Netzwerk bildet, das beispielsweise über eine kabellose Verbindung, wie WLAN, realisiert sein kann. Der Datenaustausch mit der externen Speichereinheit kann aber auch über das Internet erfolgen.

Die Rechen- und Auswerteeinheit 18 der DGNSS-Rover-Einheit 14 und die Rechen- und Auswerteeinheit 21 der Referenzstation 15 sind derart konfiguriert, dass zur Initialisierung der Referenzstation die nachfolgenden Verfahrensschritte durchgeführt werden.

Die an den Positionen P1(X1, Y1, Z1), P2(X2,

Y2, Z2), P3(X3, Y3, Z3), P4(X4, Y4, Z4), PN(XN, YN, ZN) aufgestellte Referenzstation 15 empfängt die Satellitensignale S und sendet die gemessenen Positionsdaten P1'(X1', Y1', Z1'), P2'(X2', Y2', Z2'), P3(X3', Y3', Z3'), P4(X4', Y4', Z4'), PN'(XN', YN', ZN') mittels der Sende- und Empfangseinheit 22 an die DGNSS-Rover-Einheit 15, welche die von der Referenzstation bestimmte Referenzstations-Position beschreiben (Fig. 3, Figuren 4 bis 7). Diese Positionsdaten werden von der DGNSS -Rover-Einheit mittels der Sende- und Empfangseinheit 19 empfangen. Die DGNSS-Rover-Einheit 14 liest den die vorgegebenen Positionen der Referenzstation 15 beschreibenden Positions-Datensatz PD aus der externen Speichereinheit 23 aus. Auf der Grundlage eines Vergleichs der vorgegebenen Positionen der Referenzstation P1(X1, Y1, Z1), P2(X2, Y2, Z2), P3(X3, Y3, Z3), P4(X4, Y4, Z4), PN(XN, YN, ZN) mit der von der Referenzstation 15 bestimmten Referenzstations-Position P1'(X1', Y1', Z1'), P2'(X2', Y2', Z2'), P3(X3', Y3', Z3'), P4(X4', Y4', Z4'), PN'(XN', YN', ZN') ermittelt die DGNSS-Rover-Einheit 14 die tatsächliche Referenzstations-Position P1(X1, Y1, Z1), P2(X2, Y2, Z2), P3(X3, Y3, Z3), P4(X4, Y4, Z4), PN(XN, YN, ZN) und sendet die tatsächliche Referenzstations-Position beschreibende Positionsdaten mittels der Sende- und Empfangseinheit 19 an die Referenzstation 15, welche diese Positionsdaten mittels der Sende- und Empfangseinheit 22 empfängt. Nachdem der Referenzstation 15 ihre tatsächliche Position bekannt ist, berechnet deren Rechen- und Auswerteeinheit 22 die Korrektursignale, die sie an die DGNSS-Rover-Einheit 15 sendet. Die Rechen- und Auswerteeinheit 18 der DGNSS-Rover-Einheit 14 berechnet dann auf der Grundlage der Satellitensignale und der Korrektursignale die die genaue Position des Referenzpunktes R auf der Baumaschine beschreibenden Baumaschinen-Positionsdaten.

Zur Auswahl der zugehörigen Koordinatenwerte vergleicht die Rechen- und Auswerteeinheit 18 der DGNSS-Rover-Einheit 14 die empfangene Referenzstations-Position P1'(X1', Y1', Z1'), P2'(X2', Y2', Z2'), P3(X3', Y3', Z3'), P4(X4', Y4', Z4'), PN'(XN', YN', ZN') der Referenzstation 15 mit den vorgegebenen Referenzstations-Positionen P1(X1, Y1, Z1), P2(X2, Y2, Z2), P3(X3, Y3, Z3), P4(X4, Y4, Z4), PN(XN, YN, ZN) aus dem Positions-Datensatz PD, welche den einzelnen Aufstellorten zugeordnet sind. Dies soll anhand des folgenden Ausführungsbeispiels beschrieben werden.

Fig. 3 zeigt die an der Position P1 aufgestellte Referenzstation 15. Die gemessenen Koordinatenwerte (X1', Y1', Z1') der Referenzstations-Position sind (3, 5, 0). Die Rechen- und Auswerteeinheit 18 der DGNSS-Rover-Einheit 14 bestimmt die Abweichungen der Koordinatenwerte (X1=4, Y1=5, Z1=1), (X2=8, Y2=8, Z2=0), (X3=12, Y3=6, Z3=2, (X4=15, Y4=7, Z4=2) der vorgegebenen Positionen der Referenzstation mit der von der Referenzstation 14 bestimmten Referenzstations-Position (3, 5, 0). Es zeigt sich, dass für die Position P1 die Abweichungen der Koordinatenwerte am kleinsten ist. Daher wird als tatsächliche Position der Referenzstation 15 die Position mit den Koordinatenwerten (4, 5, 1) angenommen. Beispielsweise kann eine mittlere Abweichung aus den Koordinatenwerten wie folgt berechnet werden.

Position P1

Betrag von 3-4=1
Betrag von 5-5=0
Betrag von 0-1=1
Mittlere Abweichung: (1+0+1)/3=2/3 [kleinste mittlere Abweichung)]

Position P2

Betrag von 3-8=5
Betrag von 5-8=3
Betrag von 0-0=0
Mittlere Abweichung: (5+3+0)/3=8/3

Position P3

Betrag von 3-12=9
Betrag von 5-6=1
Betrag von 0-2=2
Mittlere Abweichung: (9+1+2)/3=4

Position P4

Betrag von 3-15=12
Betrag von 5-7=2
Betrag von 0-2=2
Mittlere Abweichung: (12+2+2)/3=16/3

Die Rechen- und Auswerteeinheit 18 der DGNSS-Rover-Einheit 14 wählt die Position P1 mit den Koordinatenwerten (4, 5, 1) aus, da bei der Position P1 die mittlere Abweichung 2/3 am kleinsten ist. Es können aber beispielsweise auch die Abstände (Wegstrecken) in der Ebene (zweidimensional) oder im Raum (dreidimensional) zwischen den Positionen in dem Koordinatensystem berechnet werden und die Position mit dem kleinsten Abstand ausgewählt werden.

Die Rechen- und Auswerteeinheit 18 der DGNSS-Rover-Einheit 14 kann auch derart konfiguriert sein, dass als tatsächliche Position der Referenzstation 15 die vorgegebene Position der Referenzstation angenommen wird, deren Koordinatenwerte von den Koordinatenwerten der von der Referenzstation bestimmten Referenzstations-Position um einen Wert abweicht, der kleiner oder gleich als ein vorgegebener Grenzwert ist, oder um Werte abweichen, die kleiner oder gleich als vorgegebene Grenzwerte sind. Beispielsweise kann der Betrag der Differenz der einzelne Koordinatenwerte wie folgt berechnet und beispielsweise mit dem Grenzwert 1 verglichen werden:

Position P1 (Grenzwert 1)

Betrag von 3-4=1
Betrag von 5-5=0
Betrag von 0-1=1

$$1 \leq 1 \qquad 0 \leq 1 \qquad 1 \leq 1$$

Position P2 (Grenzwert 1)

Betrag von 3-8=5
Betrag von 5-8=3
Betrag von 0-0=0

$$5 > 1 \qquad 3 > 1 \qquad 0 \leq 1$$

Position P3 (Grenzwert 1)

Betrag von 3-12=9
Betrag von 5-6=1
Betrag von 0-2=2

$$9 > 1 \qquad 1 \leq 1 \qquad 2 > 1$$

Position P4 (Grenzwert 1)

Betrag von 3-15=12
Betrag von 5-7=2
Betrag von 0-2=2

$$12 > 1 \qquad 2 > 1 \qquad 2 > 1$$

Die Rechen- und Auswerteeinheit 18 der DGNSS-Rover-Einheit 14 wählt die Position P1 mit den Koordinatenwerten (4, 5, 1) aus, da die Koordinatenwerte bei der Position 1 kleiner oder gleich dem Grenzwert 1 sind.

Fig. 8 zeigt ein Ausführungsbeispiel, dass sich von dem unter Bezugnahme auf Fig. 3 beschriebenen Ausführungsbeispiel dadurch unterscheidet, dass die Rechen- und Auswerteeinheit 18 der DGNSS-Rover-Einheit 14 eine interne Speichereinheit 24 aufweist, auf welcher der Positions-Datensatz PD gespeichert ist. Die einander entsprechenden Komponenten sind in den Figuren mit denselben Bezugszeichen versehen. Die Rechen- und Auswerteeinheit 18 weist eine Datenschnittstelle 26 auf, über die sich der Positions-Datensatz PD von einem mobilen Datenträger, beispielsweise von einem USB-Stick 25, in die interne Speichereinheit 24 einlesen lässt. Zum Einlesen der Daten wird der USB-Stick 25 in eine USB-Buchse 26 gesteckt, welche an der DGNSS-Rover-Einheit 14 vorgesehen ist. Folglich wird der Positions-Datensatz PD nicht von einer externen Speichereinheit 23 beispielsweise eines Dateiservers (Fig. 3), sondern einer internen Speichereinheit 24 ausgelesen.

Bei einer vorteilhaften Ausführungsform wird der Positions-Datensatz PD vor Beginn der Arbeitsausführung über eine kabellose Verbindung von einer externen Speichereinheit 23 wie in Bezug auf Fig. 3 erläutert in eine interne Speichereinheit 24 der Baumaschine I übertragen. Hierdurch steht der Positions-Datensatz PD während der gesamten Bauausführung unabhängig von einer Datenverbindung zu einer zentralen Server-Einheit zur Verfügung und kann im Vorfeld der Arbeiten einfach auf die Baumaschine I übertragen werden.

Die Rechen- und Auswerteeinheit 18 der DGNSS-Rover-Einheit 14 und die Rechen- und Auswerteeinheit 21 der Referenzstation 15 können auch derart konfiguriert sein, dass zur Initialisierung der Referenzstation die nachfolgenden Verfahrensschritte durchgeführt werden.

Die Rechen- und Auswerteeinheit 18 der DGNSS-Rover-Einheit 14 liest den die vorgegebenen Positionen P1(X1, Y1, Z1), P2(X2, Y2, Z2), P3(X3, Y3, Z3), P4(X4, Y4, Z4), PN(XN, YN, ZN) der Referenzstation beschreibenden Positions-Datensatz PD aus der externen Speichereinheit 23 (Fig. 3) oder der internen Speichereinheit 24 der DGNSS-Rover-Einheit 14 (Fig. 8) aus und sendet den Positions-Datensatz PD an die Referenzstation 15, wobei die Referenzstation diese Positionsdaten empfängt. Bei diesem Ausführungsbeispiel ermittelt die Referenzstation 15 dann die tatsächliche Referenzstations-Position auf der Grundlage eines Vergleichs der vorgegebenen Positionen der Referenzstation mit der von der Referenzstation bestimmte Referenzstations-Position, wie unter Bezugnahme auf Fig. 3 beschrieben ist.

Fig. 9 zeigt ein weiteres Ausführungsbeispiel, bei dem eine Server-Einheit IV über eine Speichereinheit 27 verfügt, auf welcher der Positions-Datensatz PD gespeichert ist. Die Server-Einheit IV bildet mit der Referenzstation 15 ein Netzwerk, beispielsweise ein WLAN oder die Referenzstation 15 kommuniziert mit der Server-Einheit IV über das Internet. Die Rechen- und Auswerteeinheit 21 der Referenzstation 15 und die Server-Einheit S sind derart konfiguriert, dass die Referenzstation 15 die von der Referenzstation 15 bestimmten Referenzstations-Position P1'(X1', Y1', Z1'), P2'(X2', Y2', Z2'), P3(X3', Y3', Z3'), P4(X4', Y4', Z4'), PN'(XN', YN', ZN') an die Server-Einheit IV sendet, und diese Positionsdaten von der Server-Einheit S empfangen werden, wobei im Gegensatz zu der in Fig. 3 gezeigten Ausführungsform nicht die DGNSS-Rover-Einheit 14, sondern die Server-Einheit S die tatsächliche Referenzstations-Position auf der Grundlage eines Vergleichs der vorgegebenen Positionen der Referenzstation mit der von der Referenzstation bestimmten Referenzstations-Position ermittelt und die tatsächliche Referenzstations-Position beschreibende Positionsdaten P1(X1, Y1, Z1), P2(X2, Y2, Z2), P3(X3, Y3, Z3), P4(X4, Y4, Z4), PN(XN, YN, ZN) an die Referenzstation 15 sendet und die Referenzstation diese Positionsdaten empfängt. Bei diesem Ausführungsbeispiel ist eine bidirektionale Datenübertragung zwischen DGNSS-Rover-Einheit 14 und Referenzstation 15 nicht erforderlich. Daher verfügt die Referenzstation 15 nur über eine Sendeeinheit 22' und die DGNSS-Rover-Einheit 14 nur über eine Empfangseinheit 19'. Die Referenzstation 15 ist weiterhin dazu ausgebildet Daten mit der Server-Einheit IV auszutauschen.

Es ist aber auch möglich, dass die Server-Einheit IV einen die vorgegebenen Positionen der Referenzstation beschreibenden Positions-Datensatz PD an die Referenzstation 15 sendet und die Referenzstation 15 diesen Positions-Datensatz empfängt, wobei die Referenzstation 15 dann die tatsächliche Referenzstations-Position P(X,Y,Z) auf der Grundlage eines Vergleichs der tatsächlichen Positionen P1(X1, Y1, Z1), P2(X2, Y2, Z2), P3(X3, Y3, Z3), P4(X4, Y4, Z4), PN(XN, YN, ZN) der Referenzstation mit der von der Referenzstation bestimmten Referenzstations-Position P1'(X1', Y1', Z1'), P2'(X2', Y2', Z2'), P3(X3', Y3', Z3'), P4(X4', Y4', Z4'), PN'(XN', YN', ZN') ermittelt, wie unter Bezugnahme auf Fig. 3 beschrieben ist.

Grundsätzlich kann auch der Datenspeicher (USB-Stick 25) an die Referenzstation angeschlossen werden, um den Positions-Datensatz PD an die Referenzstation 15 zu übertragen.

Die oben beschriebene und aus der DE 10 2022 124 484 A1 bekannte Positionsbestimmung eines Baumaschinen-Referenzpunktes auf der Baumaschine setzt die Festlegung von Referenzstations-Aufstellpunkten bei der Planung der Baustelle und die Vermessung der Referenzpunkte im Gelände von einem Geodäten voraus.

Die vorliegende Erfindung betrifft den Fall, dass ein Referenzstations-Aufstellpunkt ohne den Einsatz eines Geodäten festgelegt werden soll. Dieser Fall kann dann auftreten, wenn sich ein bei der Planung festgelegter Referenzstations-Aufstellpunkt im Nachhinein beispielsweise wegen einer Verschattung durch Gebäude oder Bäume oder wegen eines zu großen Abstandes zu einem anderen Referenzstations-Aufstellpunkt als nicht geeignet erweist. Auch im Fall einer Baustellenunterbrechung kann es erforderlich sein, im Umkreis der Baumaschine einen neuen Referenzstations-Aufstellpunkt festzulegen. Hierzu verfügt das erfindungsgemäße Positionsbestimmungssystem über eine Referenzstations-Aufstellpunkt-Festlegungseinrichtung, deren Aufbau und Funktion nachfolgend im Einzelnen beschrieben wird. In Fig. 4 ist ein neu im Umkreis der Baumaschine festzulegender Referenzstations-Aufstellpunkt mit dem Bezugszeichen PN bezeichnet.

Hierbei ist zu beachten, dass im Vorfeld keine Koordinaten für den Punkt PN festgelegt sein müssen. Die Position kann entsprechend den auf der Baustelle herrschenden Bedingungen frei gewählt werden. Die Koordinaten zu dieser frei gewählten Position werden dann durch das erfindungsgemäße Verfahren wie oben beschrieben ermittelt.

Fig. 10 zeigt in einer vereinfachten schematischen Darstellung eine Rückansicht und Fig. 11 eine Seitenansicht eines Ausführungsbeispiels einer erfindungsgemäßen Baumaschine I, die über die erfindungsgemäße Referenzstations-Aufstellpunkt-Festlegungseinrichtung IA verfügt. Die Teile der erfindungsgemäßen Baumaschine, welche denjenigen der Baumaschine der Figuren 1 und 2 entsprechen, sind mit den gleichen Bezugszeichen versehen sind.

Die Figuren 10 und 11 zeigen den mit den in Arbeitsrichtung linken und rechten Laufwerken 11A, 11B auf dem Boden B aufstehenden Maschinenrahmen 2 der Baumaschine I und den an der linken und rechten Seite vorgesehenen Kantenschutz 50 in der auf den Boden abgesenkten Position. Eine der Kolben/Zylinder-Anordnungen 51 zur Höhenverstellung des Kantenschutzes 50 ist in Fig. 11 andeutungsweise dargestellt. Die GPS-Antenne 14A der DGNSS-Rover-Einheit 14 und der Baumaschinen-Referenzpunkt R befinden sich auf der Oberseite der Baumaschine I auf deren Längsachse. In Figur 10 ist die Messeinrichtung 57 zur Bestimmung der Höhenstellung des linken und rechten Kantenschutzes 50 nur schematisch dargestellt. Die Messeinrichtung 57 weist einen Messwertgeber 57A auf, der eine Höheninformation liefert. Die Messeinrichtung kann beispielsweise einen die Hubstellung der Kolben der Kolben/-Zylinder-Anordnungen 51, 52 erfassenden Messwertgeber aufweisen.

Bei dem vorliegenden Ausführungsbeispiel umfasst die Referenzstations-Aufstellpunkt-Festlegungseinrichtung IA einen an einer Kette 54 oder einer Schnur hängenden Lotkörper 55 mit einer abwärts zeigenden Spitze 55A. Das obere Ende der Kette 54 oder Schnur ist an dem Maschinenrahmen 2 befestigt. Der Befestigungspunkt 56 der Kette 54 oder Schnur liegt bei dem vorliegenden Ausführungsbeispiel an der unteren hinteren Ecke des Maschinenrahmens 2, so dass die Kette 54 oder Schnur mit dem Lotkörper 55 gut sichtbar ist. Die Länge der Kette 54 oder Schnur ist derart bemessen, dass die Spitze 55A des Lotkörpers 55 bis an den Boden B reicht, wenn sich die Baumaschine I in einer entsprechenden Höhenstellung befindet. In Fig. 10 ist die Stellung der Baumaschine I dargestellt, in der die Spitze 55A des Lotkörpers 55 den Boden B gerade berührt. In dieser Position markiert die Spitze 55A des Lotkörpers 5 einen Referenzstations-Aufstellpunkt P1(X1, Y1, Z1), P2(X2, Y2, Z2), P3(X3, Y3, Z3), P4(X4, Y4, Z4), PN(XN, YN, ZN) auf der Geländeoberfläche.

Aus den Figuren 10 und 11 ist ersichtlich, dass sich der Referenzstations-Aufstellpunkt P1(X1, Y1, Z1), P2(X2, Y2, Z2), P3(X3, Y3, Z3), P4(X4, Y4, Z4), PN(XN, YN, ZN), d. h. der Punkt, den die Spitze des Lotkörpers auf der Geländeoberfläche markiert, in eine durch die Abmessungen der Baumaschine I und deren Höhenstellung vorgegebenen räumlichen Beziehung zu dem Baumaschinen-Referenzpunkt R steht. Die Figuren 10 und 11 zeigen ein kartesisches Koordinatensystem (X', Y', Z'), dessen Ursprung in der Längsmittelebene des Maschinenrahmens 2 auf der Längsachse der Baumaschine liegt. Wenn die Position des Baumaschinen-Referenzpunktes R bekannt ist, kann die Position des Referenzstations-Aufstellpunktes P1(X1, Y1, Z1), P2(X2, Y2, Z2), P3(X3, Y3, Z3), P4(X4, Y4, Z4), PN(XN, YN, ZN) aus dem bekannten Abstand $\Delta X'$ in X'-Richtung des Koordinatensystems (X', Y', Z') und dem bekannten Abstand $\Delta Y'$ in Y'-Richtung des Koordinatensystems (X', Y', Z') sowie dem Abstand $\Delta Z' = \Delta Z'_1 + \Delta Z'_2$ in Z-Richtung des Koordinatensystems (X', Y', Z') bestimmt werden, wobei sich der Abstand $\Delta Z'_1$ in Z-Richtung des Koordinatensystems (X', Y', Z') aus den Abmessungen der Baumaschine I bzw. der Anordnung des Befestigungspunktes 56 am Maschinenrahmen 2 und der Abstand $\Delta Z_2$ in Z-Richtung aus dem Abstand des Maschinenrahmens 2 bzw. des Befestigungspunktes 56 zur Oberfläche des Bodens B ergibt.

Bei dem vorliegenden Ausführungsbeispiel ergibt sich der Abstand $\Delta Z'_1$ in Z-Richtung des Koordinatensystems (X', Y', Z') aus der Höheninformation der Messeinrichtung 57 , wenn bei der in den Figuren 10 und 11 gezeigten Ausrichtung der Baumaschine I die Unterkante 50A des linken bzw. rechten Kantenschutzes 50 auf dem Boden B aufliegt, wie in den Figuren 10 und 11 dargestellt ist. Die Höheninformation für die Bestimmung der Position des Referenzstations-Aufstellpunktes kann grundsätzlich von jeder Messeinrichtung bereitgestellt werden, die den Abstand des Maschinenrahmens zur Bodenoberfläche ermittelt. Derartige Messeinrichtungen sind bei selbstfahrenden Baumaschinen beispielsweise für die Nivellierung bereits vorhanden. Auf eine Messeinrichtung kann verzichtet werden, wenn die Länge der Kette 54 bekannt ist und die Spitze 55A des Lotkörpers 55 den Boden B berührt, so dass auf den Abstand $\Delta Z'_1$ geschlossen werden kann.

Die DGNSS-Rover-Einheit 14 des erfindungsgemäßen Positionsbestimmungssystems II ist derart konfiguriert, dass die Position eines neuen Referenzstations-Aufstellpunktes PN beschreibende Positionsdaten in einem von der Baumaschine unabhängigen Koordinatensystem (X', Y', Z') auf der Grundlage von die Position des Baumaschinen-Referenzpunktes auf der Baumaschine I an einem Wegpunkt beschreibenden Positionsdaten und der vorgegebenen räumlichen Beziehung zwischen dem Baumaschinen-Referenzpunkt R und dem als Referenzstations-Aufstellpunkt P1(X1, Y1, Z1), P2(X2, Y2, Z2), P3(X3, Y3, Z3), P4(X4, Y4, Z4), PN(XN, YN, ZN) auf der Geländeoberfläche festgelegten Punkt bestimmt wird.

Bei dem vorliegenden Ausführungsbeispiel wird zur Festlegung des neuen Referenzstations-Aufstellpunktes PN die Baumaschine bis zu einem Wegpunkt bewegt, in dessen Umkreis eine Referenzstation aufgestellt werden soll. Bei dem vorliegenden Ausführungsbeispiel wird die Baumaschine zu einem Wegpunkt bewegt, an dem die Spitze 55A des Lotkörpers 55 auf den Punkt im Gelände zeigt, an dem die Referenzstation aufgestellt werden soll. An diesem Punkt wird die Baumaschine durch Einfahren bzw. Ausfahren der Hubeinrichtungen 12A, 12B und 13A, 13B derart ausgerichtet, dass der Maschinenrahmen 2 in einer horizontalen Ebene liegt, so dass die Kette 54 oder das Seil einen rechten Winkel mit der horizontalen Ebene einschließt, d. h. der Befestigungspunkt 56 der Kette 54 oder des Seils genau oberhalb des Referenzstations-Aufstellpunktes PN liegt (Figuren 10 und 11). Die Hubeinrichtungen 12A, 12B und 13A, 13B können so weit eingefahren werden, bis die Spitze 55A des Lotkörpers 55 die Oberfläche des Bodens B berührt, so dass sich der Referenzstations-Aufstellpunkt exakt festlegen lässt. Dabei liegen der linke und rechte Kantenschutz 50 auf dem Boden B auf. Der Punkt, an dem die Spitze 55A des Lotkörpers 55 auf den Boden B trifft, wird dann mit einem Vermarkungselement, insbesondere mit einem Erdnagel, dauerhaft markiert.

Die DGNSS-Rover-Einheit 14 bestimmt auf der Grundlage der Satellitensignale eines globalen Navigationssatellitensystems S und der Korrektursignale der im Umkreis der Baumaschine an einem anderen Aufstellpunkt bereits im Gelände aufgestellten Referenzstation, beispielsweise der an dem Referenzstations-Aufstellpunkt P3 aufgestellten Referenzstation, die Position des Baumaschinen-Referenzpunktes R auf der Baumaschine I beschreibende Positionsdaten in einem von der Baumaschine unabhängigen Koordinatensystem (X', Y', Z'). Darüber hinaus bestimmt die DGNSS-Rover-Einheit 14 die Position des neuen Referenzstations-Aufstellpunktes PN beschreibende Positionsdaten in einem von der Baumaschine unabhängigen Koordinatensystem (X', Y', Z') auf der Grundlage der die Position des Baumaschinen-Referenzpunktes R auf der Baumaschine I an dem Wegpunkt beschreibenden Positionsdaten sowie des Abstandes $\Delta X$ in X-Richtung des Koordinatensystems (X', Y', Z'), des Abstandes $\Delta Y'$ in Y'-Richtung des Koordinatensystems (X', Y', Z') und des Abstandes $\Delta Z' = \Delta Z'_1 + \Delta Z'_2$ in Z-Richtung des Koordinatensystems (X', Y', Z'). Den Abstand $\Delta Z'_2$ in Z'-Richtung des Koordinatensystems (X, Y, Z) berechnet die DGNSS-Rover-Einheit 14 aus der Höheninformation der Messeinrichtung 57. Die für die Berechnung der Koordinaten erforderlichen Werte können aus einer Speichereinheit ausgelesen werden. Die die Position des Referenzstations-Aufstellpunktes P1(X1, Y1, Z1), P2(X2, Y2, Z2), P3(X3, Y3, Z3), P4(X4, Y4, Z4), PN(XN, YN, ZN) beschreibenden Positionsdaten werden dann in einer Speichereinheit, beispielsweise der Speichereinheit 23 (Fig. 3) oder der Speichereinheit 24 (Fig. 8) oder der Speichereinheit 27 (Fig. 9) gespeichert, so dass der neu generierte Punkt im Gelände weiteren Applikationen zur Verfügung steht.

Daraufhin kann eine Referenzstation 15 an dem neuen Referenzstations-Aufstellpunkt PN aufgestellt werden, welcher ohne den Einsatz eines Geodäten "von der Baumaschine selbst" vermessen worden ist. Wenn die Referenzstation an dem neuen Referenzstations-Aufstellpunkt PN aufgestellt ist, kann die Initialisierung der Referenzstation dadurch vorgenommen werden, dass die "von der Baumaschine selbst" bestimmte Position des Referenzstations-Aufstellpunktes in die Referenzstation eingegeben oder eingelesen wird.

Bei dem vorliegenden Ausführungsbeispiel wird die "mit der Baumaschine selbst" bestimmte Position des Referenzstations-Aufstellpunktes zusammen mit den vorgegebenen Positionen P1(X1, Y1, Z1), P2(X2, Y2, Z2), P3(X3, Y3, Z3), P4(X4, Y4, Z4), PN(XN, YN, ZN) der anderen Referenzstationen in der Speichereinheit 23, 24 oder 27 gespeichert. Folglich steht auch diese Position dem System zur weiteren Datenverarbeitung zur Verfügung.

Das Positionsbestimmungssystem II ist derart konfiguriert ist, dass zur Initialisierung der an dem neuen Referenzstations-Aufstellpunkt aufgestellten Referenzstation der die Positionen der Referenzstations-Aufstellpunkte beschreibende Positions-Datensatz PD aus der Speichereinheit 23, 24 oder 27 ausgelesen wird und die tatsächliche Referenzstations-Position auf der Grundlage eines Vergleichs der vorgegebenen Positionen der Referenzstations-Aufstellpunkte (P1(X1, Y1, Z1), P2(X2, Y2, Z2), P3(X3, Y3, Z3), P4(X4, Y4, Z4), PN(XN, YN, ZN)) mit der von der Referenzstation bestimmten Referenzstations-Position Position P1'(X1', Y1', Z1'), P2'(X2', Y2', Z2'), P3(X3', Y3', Z3'), P4(X4', Y4', Z4'), PN'(XN', YN', ZN') ermittelt wird. Die Initialisierung der neuen Referenzstation kann somit wie die Initialisierung der bereits aufgestellten Referenzstationen nach dem oben beschriebenen Verfahren erfolgen.

Fig. 12 zeigt eine alternative Ausführungsform der Referenzstations-Aufstellpunkt-Festlegungseinrichtung IA, die sich von der oben beschriebenen Referenzstations-Aufstellpunkt-Festlegungseinrichtung dadurch unterscheidet, dass anstelle des an einer Kette oder an einem Seil aufgehängten Lotkörpers ein Laser 58 vorgesehen ist, der an dem Befestigungspunkt 56 an dem Maschinenrahmen 2 der Baumaschine I befestigt ist, welcher in einer vorgegebenen räumlichen Beziehung zu dem Baumaschinen-Referenzpunkt (R) auf der Baumaschine steht. Bei diesem Ausführungsbeispiel trifft der Laserstrahl 59 an dem Referenzstations-Aufstellpunkt PN in einem rechten Winkel auf die Bodenoberfläche.

Die Figuren 13A und 13B zeigen eine weitere alternative Ausführungsform, bei der die Referenzstations-Aufstellpunkt-Festlegungseinrichtung IA einen Messstab 60 umfasst, der an dem Befestigungspunkt 56 an dem Maschinenrahmen 2 der Baumaschine I in Richtung seiner Längsachse verschiebbar befestigt ist. Zur längsverschiebbaren Befestigung des Messstabes 60 weist die Referenzstations-Aufstellpunkt-Festlegungseinrichtung IA eine schematisch dargestellte Linearführung 61 auf. Darüber hinaus ist eine die Höhenstellung des Messstabes 60 erfassende Messeinrichtung 62 mit einem Messwertgeber vorgesehen, der eine Höheninformation des Messstabes 60 liefert. Der Messstab 60 ist derart an dem Maschinenrahmen 2 befestigt, dass dessen Längsachse mit Boden B einen rechten Winkel einschließt, wenn der Maschinenrahmen 2 horizontal ausgerichtet ist. Zur Festlegung des Referenzstations-Aufstellpunktes wird der Messstab aus der in Fig. 13A gezeigten Position in die in Fig. 13B gezeigte Position so weit nach unten verschoben, bis dessen Spitze 60A auf den Boden B trifft. Mit der Höheninformation der Messeinrichtung 62 und den bekannten Abmessungen der Baumaschine I stehen wieder sämtliche Größen zur Verfügung, um die genaue Position des Referenzstations-Aufstellpunktes nach dem oben beschriebenen Verfahren bestimmen zu können.

Die bodenparallele und/oder horizontale Ausrichtung des Maschinenrahmens ist grundsätzlich die bevorzugte Vorgehensweise zur Ermittlung des Referenzstations-Aufstellpunktes. Ist die Maschine nicht gezielt ausgerichtet worden, kann die Neigung des Maschinenrahmens relativ zur Bodenoberfläche bzw. zur Horizontalen jedoch mit verschiedenen Sensoren, beispielsweise die Hubstellung der Hubsäulen 12A/B, 13A/B erfassende Sensoren oder Neigungssensoren ermittelt werden. Mit der ermittelten Neigung und den bekannten Dimensionen des Maschinenrahmens ist es dann auch möglich die räumliche Beziehung zwischen der Referenzstations-Aufstellpunkt-Festlegungseinrichtung IA, beispielsweise dem Befestigungspunkt der Kette oder dem Seil, und dem Baumaschinen-Referenzpunkt R zu ermitteln und das erfindungsgemäße Verfahren durchzuführen.

## Patentansprüche

1. Verfahren zum Festlegen eines Referenzstations-Aufstellpunktes zum Aufstellen einer Referenzstation (15) im Umkreis einer sich im Gelände bewegenden selbstfahrenden Baumaschine (I), welche Korrektursignale an eine der selbstfahrenden Baumaschine zugeordnete DGNSS-Rover-Einheit sendet, wobei die DGNSS-Rover-Einheit auf der Grundlage der Satellitensignale eines globalen Navigationssatellitensystems (S) und der Korrektursignale einer im Umkreis der Baumaschine an einem anderen Aufstellpunkt bereits im Gelände aufgestellten Referenzstation die Position eines Baumaschinen-Referenzpunktes (R) auf der Baumaschine beschreibende Positionsdaten in einem von der Baumaschine unabhängigen Koordinatensystem (X, Y, Z) bestimmt, umfassend die folgenden Verfahrensschritte:

    Bewegen der Baumaschine bis zu einem Wegpunkt im Gelände, in dessen Umkreis eine Referenzstation aufgestellt werden soll, und Bestimmen von die Position des Baumaschinen-Referenzpunktes (R) auf der Baumaschine (I) beschreibenden Positionsdaten in einem von der Baumaschine unabhängigen Koordinatensystem (X, Y, Z) mittels der DGNSS-Rover-Einheit an diesem Wegpunkt auf der Grundlage der Satellitensignale eines globalen Navigationssatellitensystems (S) und der Korrektursignale der im Umkreis der Baumaschine bereits im Gelände aufgestellten Referenzstation,
Festlegen eines in einer vorgegebenen räumlichen Beziehung zu dem Baumaschinen-Referenzpunkt (R) auf der Baumaschine (I) stehenden Punktes auf der Geländeoberfläche als den Referenzstations-Aufstellpunkt (P1(X1, Y1, Z1), P2(X2, Y2, Z2), P3(X3, Y3, Z3), P4(X4, Y4, Z4), PN(XN, YN, ZN)), an der die Referenzstation aufgestellt werden soll,
Bestimmen von die Position des Referenzstations-Aufstellpunktes (P1(X1, Y1, Z1), P2(X2, Y2, Z2), P3(X3, Y3, Z3), P4(X4, Y4, Z4), PN(XN, YN, ZN)) beschreibenden Positionsdaten in einem von der Baumaschine (I) unabhängigen Koordinatensystem (X, Y, Z) auf der Grundlage der die Position des Baumaschinen-Referenzpunktes (R) auf der Baumaschine (I) an diesem Wegpunkt beschreibenden Positionsdaten und der vorgegebenen räumlichen Beziehung zwischen dem Baumaschinen-Referenzpunkt (R) auf der Baumaschine und dem als Referenzstations-Aufstellpunkt (P1(X1, Y1, Z1), P2(X2, Y2, Z2), P3(X3, Y3, Z3), P4(X4, Y4, Z4), PN(XN, YN, ZN)) auf der Geländeoberfläche festgelegten Punkt und
Speichern der die Position des Referenzstations-Aufstellpunktes (P1(X1, Y1, Z1), P2(X2, Y2, Z2), P3(X3, Y3, Z3), P4(X4, Y4, Z4), PN(XN, YN, ZN)) beschreibenden Positionsdaten in einer Speichereinheit.

**2.** Verfahren nach Anspruch 1, **dadurch gekennzeichnet, dass** die Festlegung des Referenzstations-Aufstellpunktes (P1(X1, Y1, Z1), P2(X2, Y2, Z2), P3(X3, Y3, Z3), P4(X4, Y4, Z4), PN(XN, YN, ZN)) auf der Geländeoberfläche mittels eines an einer Kette (54) oder einer Schnur hängenden Lotkörpers (55) mit einer abwärts zeigenden Spitze (55A) erfolgt, wobei die Kette oder Schnur an der Baumaschine an einem Befestigungspunkt (56) befestigt ist, welcher in einer vorgegebenen räumlichen Beziehung zu dem Baumaschinen-Referenzpunkt (R) auf der Baumaschine (I) steht, wobei vorzugsweise die Baumaschine aus einer angehobenen Position, in der sich die Spitze des Lotkörpers oberhalb der Geländeoberfläche befindet, in eine abgesenkte Position abgesenkt wird, während die Spitze des Lotkörpers auf den Referenzstations-Aufstellpunkt zeigt, **oder**

die Festlegung des Referenzstations-Aufstellpunktes (P1(X1, Y1, Z1), P2(X2, Y2, Z2), P3(X3, Y3, Z3), P4(X4, Y4, Z4), PN(XN, YN, ZN)) auf der Geländeoberfläche mittels eines vorgesehenen Messstabes (60) mit einer abwärts zeigenden Spitze (60A) erfolgt, wobei der Messstab an der Baumaschine an einem Befestigungspunkt (56) in Richtung seiner Längsachse verschiebbar befestigt ist, welcher in einer vorgegebenen räumlichen Beziehung zu dem Baumaschinen-Referenzpunkt (R) auf der Baumaschine (I) steht, wobei der Messstab aus einer angehobenen Position, in der sich die Spitze des Messstabes oberhalb der Geländeoberfläche befindet, in eine abgesenkte Position abgesenkt wird, während die Spitze des Messtabes auf den Referenzstations-Aufstellpunkt zeigt, **oder**
die Festlegung des Referenzstations-Aufstellpunktes (P1(X1, Y1, Z1), P2(X2, Y2, Z2), P3(X3, Y3, Z3), P4(X4, Y4, Z4), PN(XN, YN, ZN)) auf der Geländeoberfläche mittels eines Lasers (58) erfolgt, wobei der Laser an der Baumaschine an einem Befestigungspunkt (56) befestigt ist, welcher in einer vorgegebenen räumlichen Beziehung zu dem Baumaschinen-Referenzpunkt (R) auf der Baumaschine (I) steht.

**3.** Verfahren nach Anspruch 1 oder 2, **dadurch gekennzeichnet, dass** die Baumaschine (I) zur Festlegung des Referenzstations-Aufstellpunktes (P1(X1, Y1, Z1), P2(X2, Y2, Z2), P3(X3, Y3, Z3), P4(X4, Y4, Z4), PN(XN, YN, ZN)) horizontal und/oder parallel zur Geländeoberfläche ausgerichtet wird.

**4.** Verfahren nach einem der Ansprüche 1 bis 3, **dadurch gekennzeichnet, dass** der Referenzstations-Aufstellpunkt (P1(X1, Y1, Z1), P2(X2, Y2, Z2), P3(X3, Y3, Z3), P4(X4, Y4, Z4), PN(XN, YN, ZN)) mittels eines Vermarkungselements, insbesondere eines Erdnagels, markiert wird.

**5.** Verfahren zur Bestimmung der Position eines Baumaschinen-Referenzpunktes (R) auf einer sich im Gelände bewegenden Baumaschine (I) in einem von der Baumaschine unabhängigen Koordinatensystem (X, Y, Z) umfassend die folgenden Verfahrensschritte:

Aufstellen einer Referenzstation (15) im Umkreis der Baumaschine (I),
Bereitstellen einer DGNSS-Rover-Einheit, die auf der Grundlage der Satellitensignale eines globalen Navigationssatellitensystems (S) und von Korrektursignalen der im Umkreis der Baumaschine aufgestellten Referenzstation (15) die Position eines Referenzpunktes (R) auf der Baumaschine (I) beschreibende Positionsdaten in einem von der Baumaschine unabhängigen Koordinatensystem (X, Y, Z) bestimmt, wobei die Korrektursignale auf der Grundlage der tatsächlichen Referenzstations-Position (P1(X1, Y1, Z1), P2(X2, Y2, Z2), P3(X3, Y3, Z3), P4(X4, Y4, Z4), PN(XN, YN, ZN)) und der von der Referenzstation bestimmten Referenzstations-Position (P1'(X1', Y1', Z1'), P2'(X2', Y2', Z2'), P3'(X3', Y3', Z3'), P4'(X4', Y4', Z4'), PN'(XN', YN', ZN')) berechnet werden,
**dadurch gekennzeichnet, dass** der Referenzstations-Aufstellpunkt (P1(X1, Y1, Z1), P2(X2, Y2, Z2), P3(X3, Y3, Z3), P4(X4, Y4, Z4)), an dem die Referenzstation (15) aufgestellt werden soll, nach einem Verfahren nach einem der Ansprüche 1 bis 4 festgelegt wird und die Referenzstation (15) an dem Referenzstations-Aufstellpunkt aufgestellt wird.

**6.** Verfahren nach Anspruch 5, **dadurch gekennzeichnet, dass** zur Initialisierung der Referenzstation (15) die tatsächliche Referenzstations-Position auf der Grundlage eines Vergleichs von in einer Speichereinheit (23) gespeicherten Positionsdaten, die die Positionen von vorgegebenen Referenzstations-Aufstellpunkten beschreiben, mit der von der Referenzstation bestimmten Referenzstations-Position (P1'(X1', Y1', Z1'), P2'(X2', Y2', Z2'), P3'(X3', Y3', Z3'), P4'(X4', Y4', Z4'), PN'(XN', YN', ZN')) ermittelt wird.

**7.** Positionsbestimmungssystem zur Bestimmung der Position eines Baumaschinen-Referenzpunktes (R) auf einer selbstfahrenden Baumaschine (I) in einem von der Baumaschine unabhängigen Koordinatensystem (X, Y, Z) umfassend

eine der Baumaschine (I) zuzuordnende DGNSS-Rover-Einheit (14) zum Empfangen von Satellitensignalen eines globalen Navigationssatellitensystems (S) und von Korrektursignalen einer im Umkreis der selbstfahrenden Baumaschine aufzustellenden Referenzstation (15), wobei die DGNSS-Rover-Einheit derart konfiguriert ist, dass auf der Grundlage der Satellitensignale und der Korrektursignale die Position eines Baumaschinen-Referenzpunktes (R) auf der Baumaschine (I) beschreibende Positionsdaten (P1(X1, Y1, Z1), P2(X2, Y2, Z2), P3(X3, Y3, Z3), P4(X4, Y4, Z4), PN(XN, YN, ZN)) in einem von der Baumaschine unabhängigen Koordinatensystem (X, Y, Z) bestimmt werden, und
die im Umkreis der Baumaschine (I) aufzustellende Referenzstation (15) zum Senden von Korrektursignalen an die DGNSS-Rover-Einheit (14), wobei die Referenzstation (15) derart konfiguriert ist, dass die Korrektursignale auf der Grundlage der tatsächlichen Referenzstations-Position (P1(X1, Y1, Z1), P2(X2, Y2, Z2), P3(X3, Y3, Z3), P4(X4, Y4, Z4), PN(XN, YN, ZN)) und der von der Referenzstation bestimmten Referenzstations-Position (P1'(X1', Y1', Z1'), P2'(X2', Y2', Z2'), P3'(X3', Y3', Z3'), P4'(X4', Y4', Z4'), PN'(XN', YN', ZN')) berechnet werden,
**dadurch gekennzeichnet, dass** das Positionsbestimmungssystem (II) eine Referenzstations-Aufstellpunkt-Festlegungseinrichtung (IA) umfasst, welche derart ausgebildet ist, dass ein Punkt auf der Geländeoberfläche, welcher in einer vorgegebenen räumlichen Beziehung zu dem Baumaschinen-Referenzpunkt (R) auf der Baumaschine (I) steht, als ein Referenzstations-Aufstellpunkt (P1(X1, Y1, Z1), P2(X2, Y2, Z2), P3(X3, Y3, Z3), P4(X4, Y4, Z4), PN(XN, YN, ZN)) festlegbar ist.

**8.** Positionsbestimmungssystem nach Anspruch 7, **dadurch gekennzeichnet, dass** die DGNSS-Rover-Einheit (14) derart konfiguriert ist, dass die Position des Referenzstations-Aufstellpunktes (P1(X1, Y1, Z1), P2(X2, Y2, Z2), P3(X3, Y3, Z3), P4(X4, Y4, Z4), PN(XN, YN, ZN)) beschreibende Positionsdaten in einem von der Baumaschine unabhängigen Koordinatensystem (X, Y, Z) auf der Grundlage von die Position des Baumaschinen-Referenzpunktes (R) auf der Baumaschine (I) beschreibenden Positionsdaten und der vorgegebenen räumlichen Beziehung zwischen dem Baumaschinen-Referenzpunkt (R) auf der Baumaschine und dem als Referenzstations-Aufstellpunkt auf der Geländeoberfläche festgelegten Punkt bestimmt werden.

**9.** Positionsbestimmungssystem nach Anspruch 8, **dadurch gekennzeichnet, dass** in einer Speichereinheit (23) Positionsdaten gespeichert sind, die die Positionen von vorgegebenen Referenzstations-Aufstellpunkten beschreiben, und dass das Positionsbestimmungssystem (II) derart konfiguriert ist, dass zur Initialisierung einer an einem Referenzstations-Aufstellpunkt (P1(X1, Y1, Z1), P2(X2, Y2, Z2), P3(X3, Y3, Z3), P4(X4, Y4, Z4), PN(XN, YN, ZN)) aufzustellenden Referenzstation (15) die die Positionen der Referenzstations-Aufstellpunkte beschreibenden Positionsdaten aus der Speichereinheit ausgelesen werden und die tatsächliche Referenzstations-Position auf der Grundlage eines Vergleichs der die vorgegebenen Referenzstations-Aufstellpunkte beschreibenden Positionsdaten mit der von der Referenzstation bestimmten Referenzstations-Position ermittelt wird.

**10.** Positionsbestimmungssystem nach Anspruch 9, **dadurch gekennzeichnet, dass** die DGNSS-Rover-Einheit (14) derart konfiguriert ist, dass die die Position des Referenzstations-Aufstellpunktes (P1(X1, Y1, Z1), P2(X2, Y2, Z2), P3(X3, Y3, Z3), P4(X4, Y4, Z4), PN(XN, YN, ZN)) beschreibenden Positionsdaten, die auf der Grundlage von die Position des Baumaschinen-Referenzpunktes (R) auf der Baumaschine (I) beschreibenden Positionsdaten und der vorgegebenen räumlichen Beziehung zwischen dem Baumaschinen-Referenzpunkt (R) auf der Baumaschine und dem als Referenzstations-Aufstellpunkt auf der Geländeoberfläche festgelegten Punkt bestimmt worden sind, in der Speichereinheit (23) gespeichert werden.

**11.** Positionsbestimmungssystem nach einem der Ansprüche 7 bis 10, **dadurch gekennzeichnet, dass** die Referenzstations-Aufstellpunkt-Festlegungseinrichtung (IA) einen an einer Kette (54) oder einer Schnur hängenden Lotkörpers (55) mit einer abwärts zeigenden Spitze (55A) oder einen Messstab 60) mit einer abwärts zeigenden Spitze (60A) oder einen Laser (58) umfasst.

**12.** Positionsbestimmungssystem nach einem der Ansprüche 7 bis 11, **dadurch gekennzeichnet, dass** die Referenzstations-Aufstellpunkt-Festlegungseinrichtung (IA) ein Vermarkungselement zur Markierung des Referenzstations-Aufstellpunktes, insbesondere einen Erdnagel, umfasst.

**13.** Baumaschinensystem umfassend eine Baumaschine (I) und ein Positionsbestimmungssystem (II) nach einem der Ansprüche 7 bis 10, **dadurch gekennzeichnet, dass** die Referenzstations-Aufstellpunkt-Festlegungseinrichtung (IA)

einen an einer Kette (54) oder einer Schnur hängenden Lotkörper (55) mit einer abwärts zeigenden Spitze (56) umfasst, wobei die Kette oder Schnur an einem an der Baumaschine vorgesehenen Befestigungspunkt (56) befestigt ist, welcher in einer vorgegebenen räumlichen Beziehung zu dem Baumaschinen-Referenzpunkt (R) auf der Baumaschine steht, **oder**
die Referenzstations-Aufstellpunkt-Festlegungseinrichtung (IA) einen Messstab (60) mit einer abwärts zeigenden Spitze (60A) umfasst, wobei der Messstab an der Baumaschine an einem Befestigungspunkt (56) in Richtung seiner Längsachse verschiebbar befestigt ist, welcher in einer vorgegebenen räumlichen Beziehung zu dem Baumaschinen-Referenzpunkt (R) auf der Baumaschine (I) steht, **oder**
die Referenzstations-Aufstellpunkt-Festlegungseinrichtung (IA) einen Laser (58) umfasst, wobei der Laser an der Baumaschine an einem Befestigungspunkt (56) befestigt ist, welcher in einer vorgegebenen räumlichen Beziehung zu dem Baumaschinen-Referenzpunkt (R) auf der Baumaschine steht.

**14.** Baumaschinensystem nach Anspruch 13, **dadurch gekennzeichnet, dass** die vorgegebene räumliche Beziehung zwischen dem Baumaschinen-Referenzpunkt (R) und der Position des Referenzstations-Aufstellpunktes (P1(X1, Y1, Z1), P2(X2, Y2, Z2), P3(X3, Y3, Z3), P4(X4, Y4, Z4), PN(XN, YN, ZN)) auf der Grundlage des Abstandes des Befestigungspunktes (56) von dem Baumaschinen-Referenzpunkt (R) in einer X'-Richtung eines kartesischen Koordinatensystems (X', Y', Z') und des Abstandes des Befestigungspunktes (56) von dem Baumaschinen-Referenzpunkt (R) in einer Y'-Richtung des kartesischen Koordinatensystems (X', Y', Z') und des Abstandes des Befestigungspunktes (56) von der Bodenoberfläche in einer Z'-Richtung des kartesischen Koordinatensystems (X', Y', Z') bestimmt wird.

**15.** Baumaschinensystem nach Anspruch 14, **dadurch gekennzeichnet, dass** die Baumaschine einen Maschinenrahmen (2) mit einem nach unten offenen Walzengehäuse (5) aufweist, in dem eine Arbeitswalze (4) zur Bearbeitung des Bodens (B) angeordnet ist, wobei das Walzengehäuse zumindest an einer Seite von einem Kantenschutz (50) verschlossen ist, welcher am Maschinenrahmen (2) zwischen einer gegenüber der Bodenoberfläche angehobenen Position und einer auf die Bodenoberfläche abgesenkten Position verstellbar ist, in welcher der Kantenschutz mit seiner Unterkante (50A) auf der Bodenoberfläche aufliegt, und dass die Baumaschine (I) eine die Höhenstellung des Kantenschutzes erfassende Messeinrichtung (57) aufweist, wobei die DGNSS-Rover-Einheit (14) derart konfiguriert ist, dass der Abstand des Befestigungspunktes (R) von der Bodenoberfläche in der Z-Richtung des kartesischen Koordinatensystems auf der Grundlage der Höheninformation der Messeinrichtung (57) bestimmt wird.

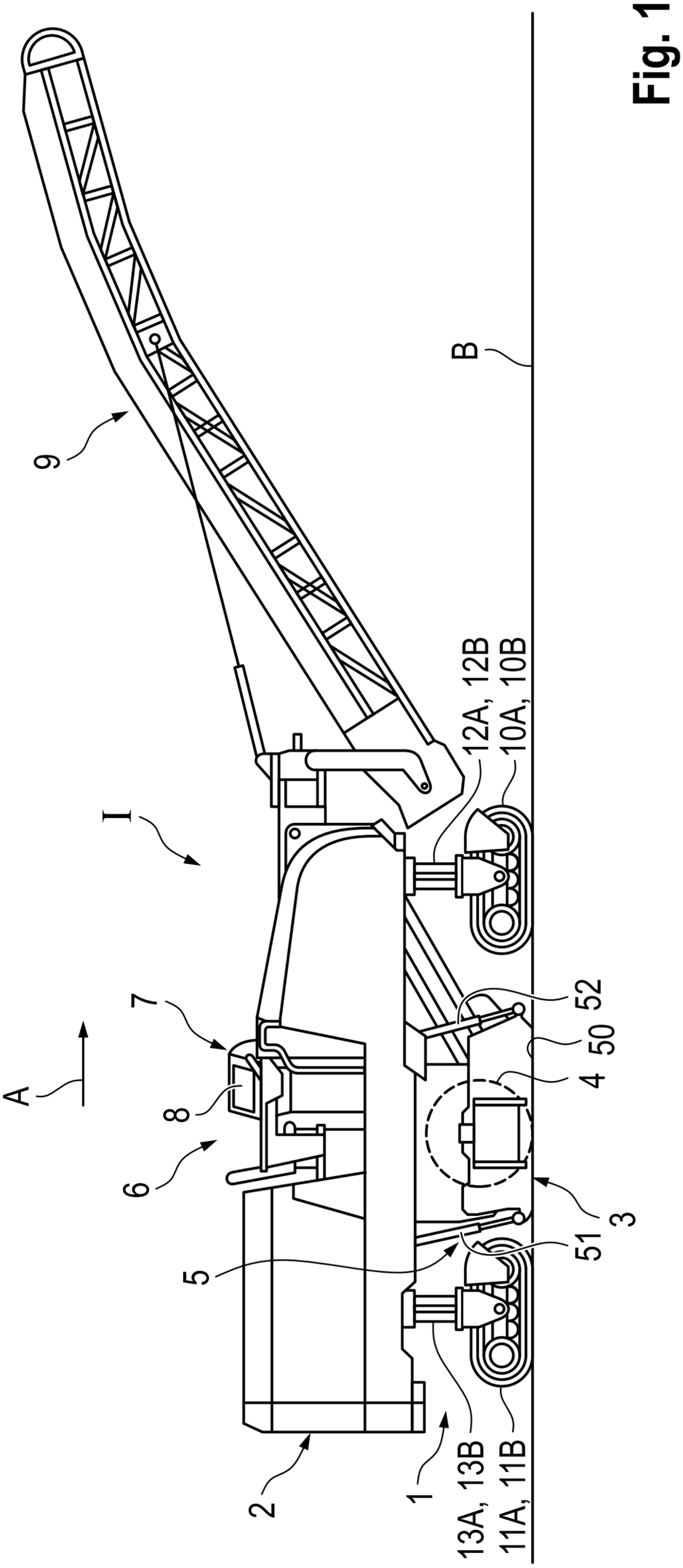


Fig. 1

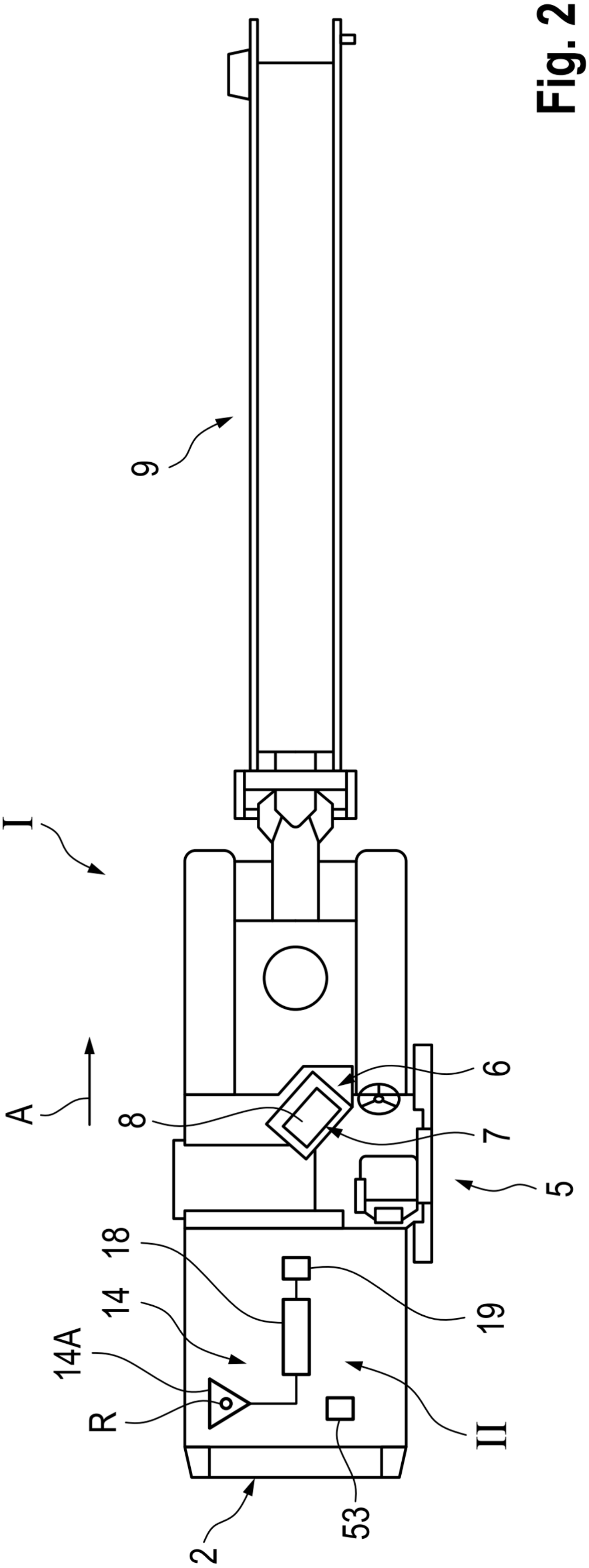


Fig. 2

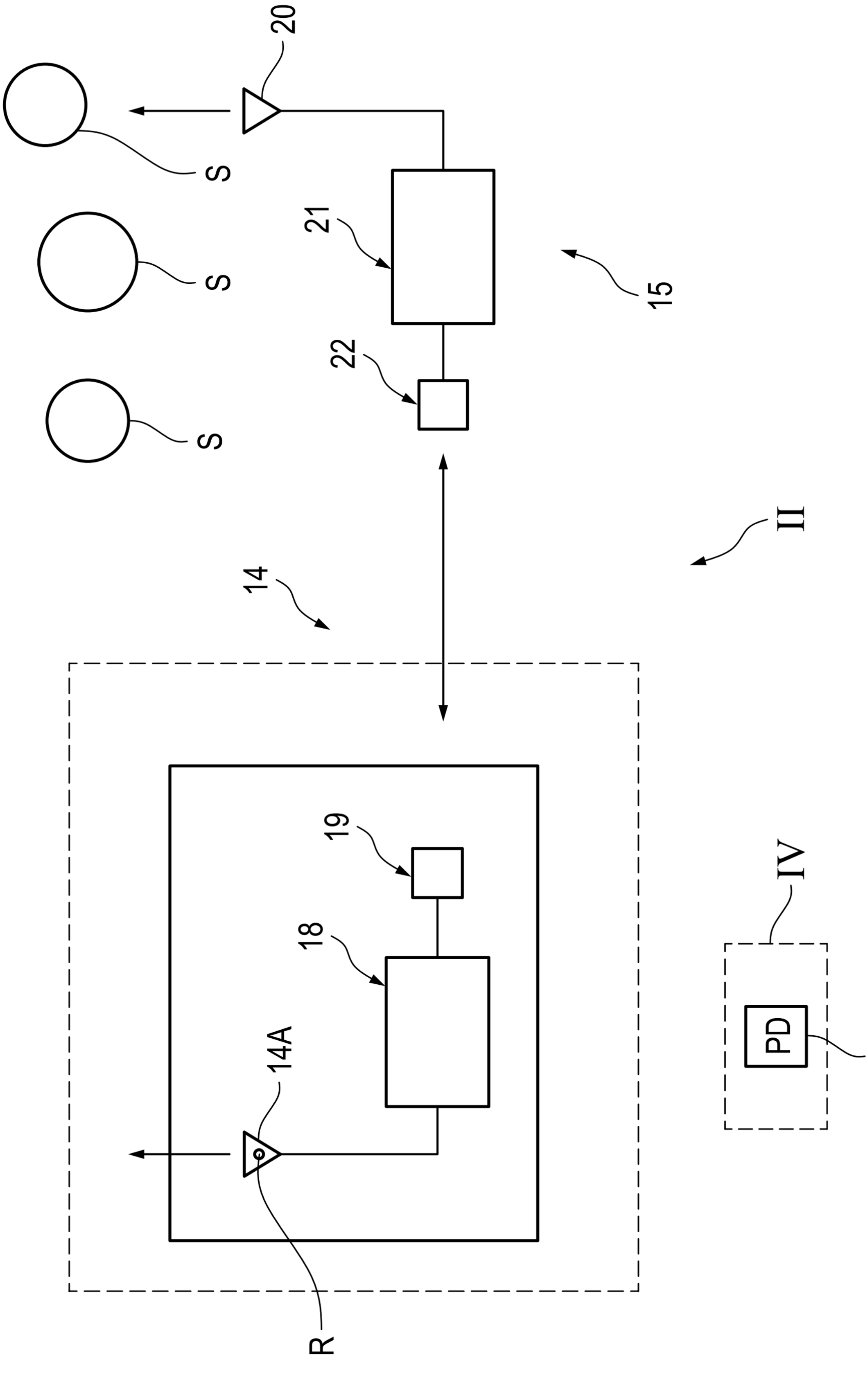


Fig. 3

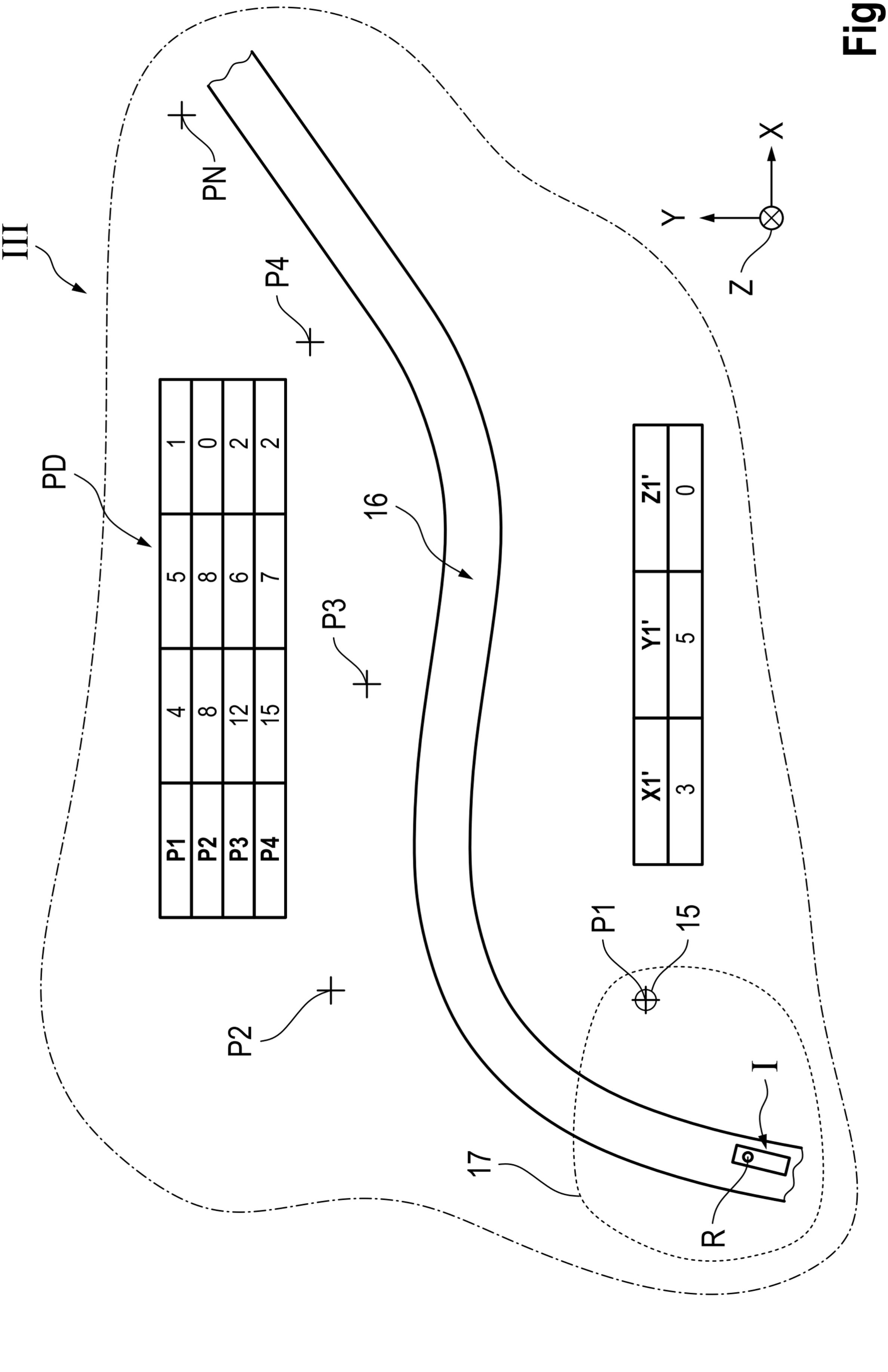


| | | | |
|---|---|---|---|
| P1 | 4 | 5 | 1 |
| P2 | 8 | 8 | 0 |
| P3 | 12 | 6 | 2 |
| P4 | 15 | 7 | 2 |

| X1' | Y1' | Z1' |
|---|---|---|
| 3 | 5 | 0 |

Fig. 4

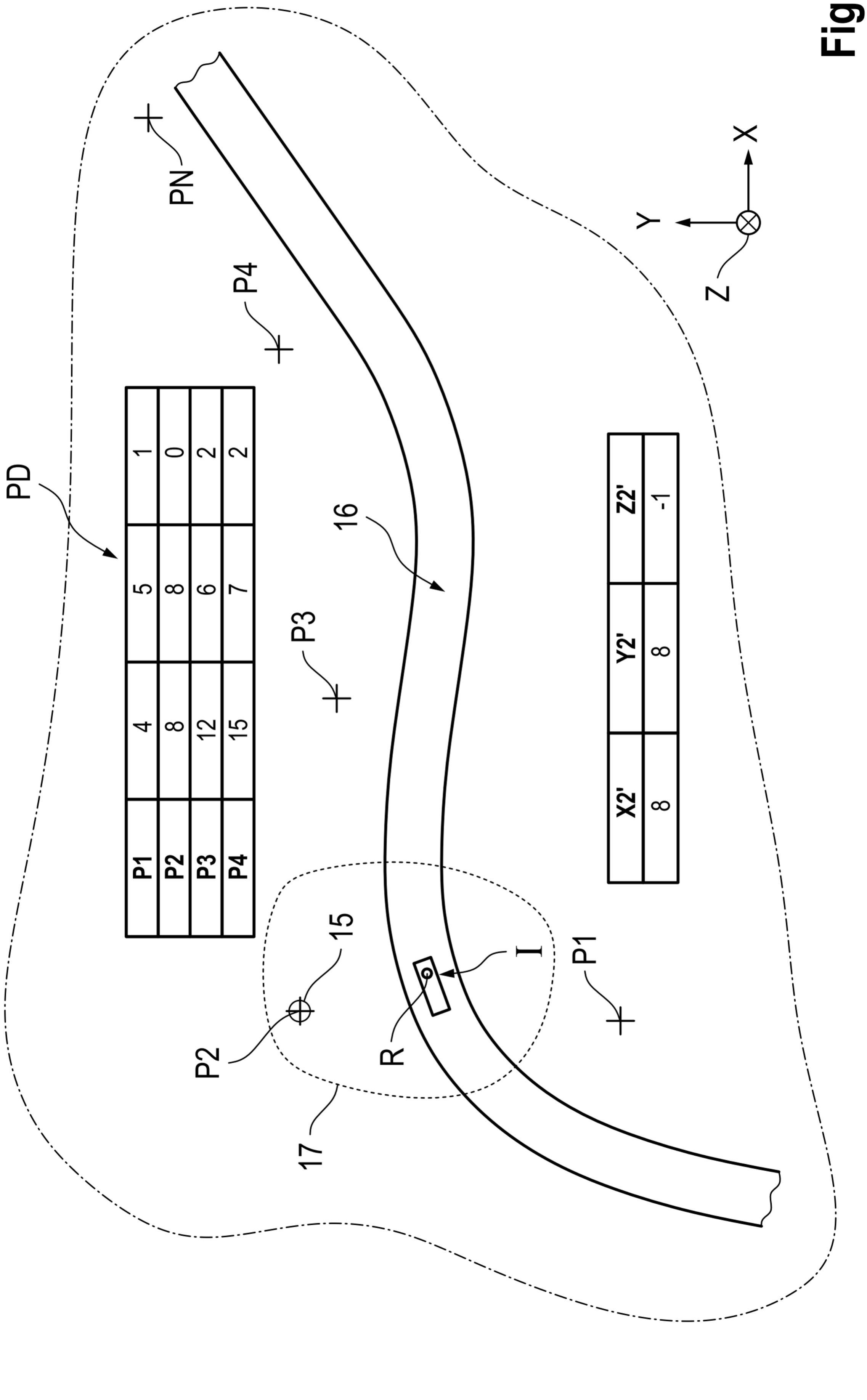
PD
PN
P4
P3
P2
P1
15
16
17
R
I
X
Y
Z

| | | | |
|---|---|---|---|
| P1 | 4 | 5 | 1 |
| P2 | 8 | 8 | 0 |
| P3 | 12 | 6 | 2 |
| P4 | 15 | 7 | 2 |

| X2' | Y2' | Z2' |
|---|---|---|
| 8 | 8 | -1 |


Fig. 5

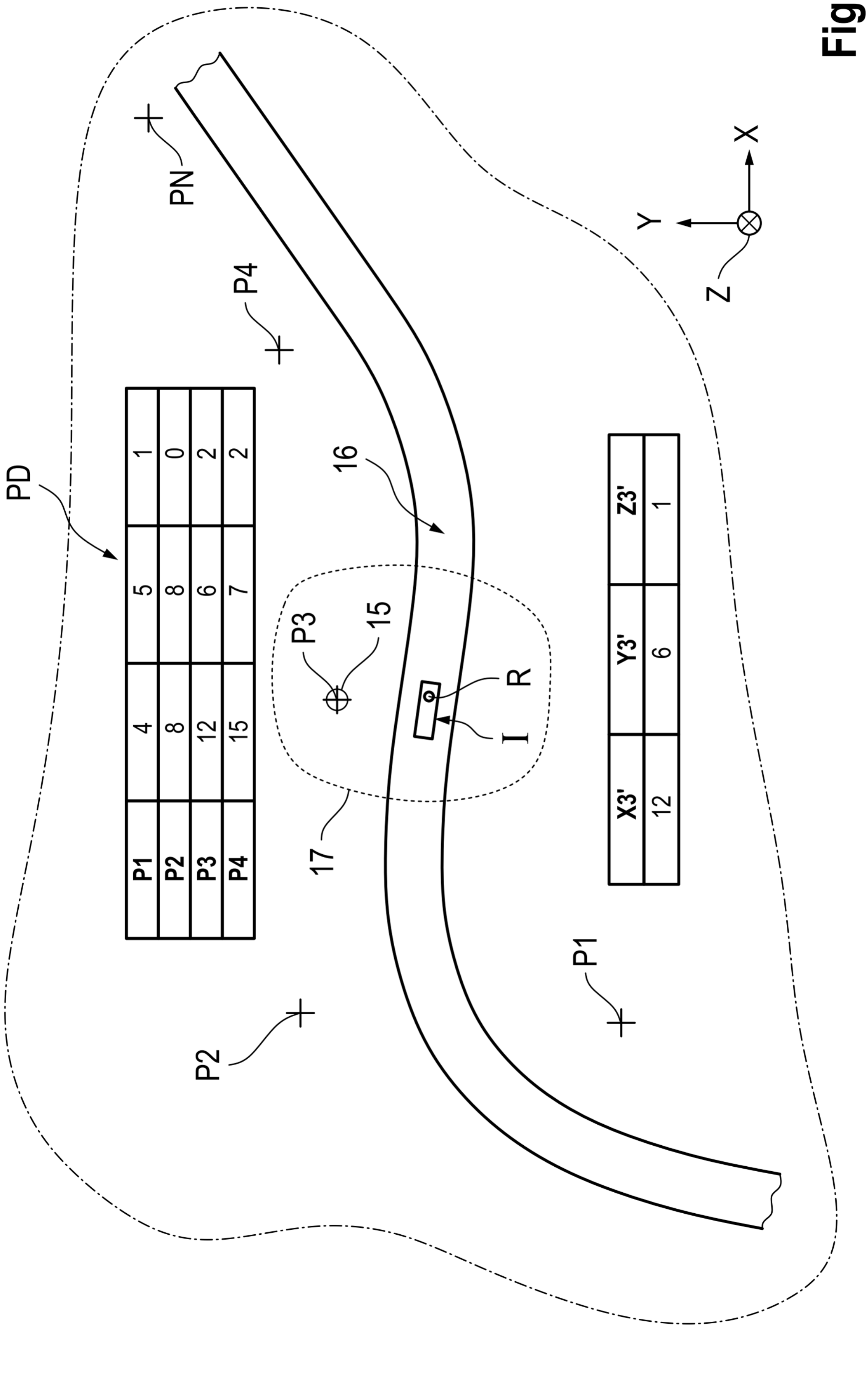
PN
P4
PD
P1 4 5 1
P2 8 8 0
P3 12 6 2
P4 15 7 2
16
P3
15
R
I
17
P2
P1
X3' Y3' Z3'
12 6 1
X
Y
Z

Fig. 6

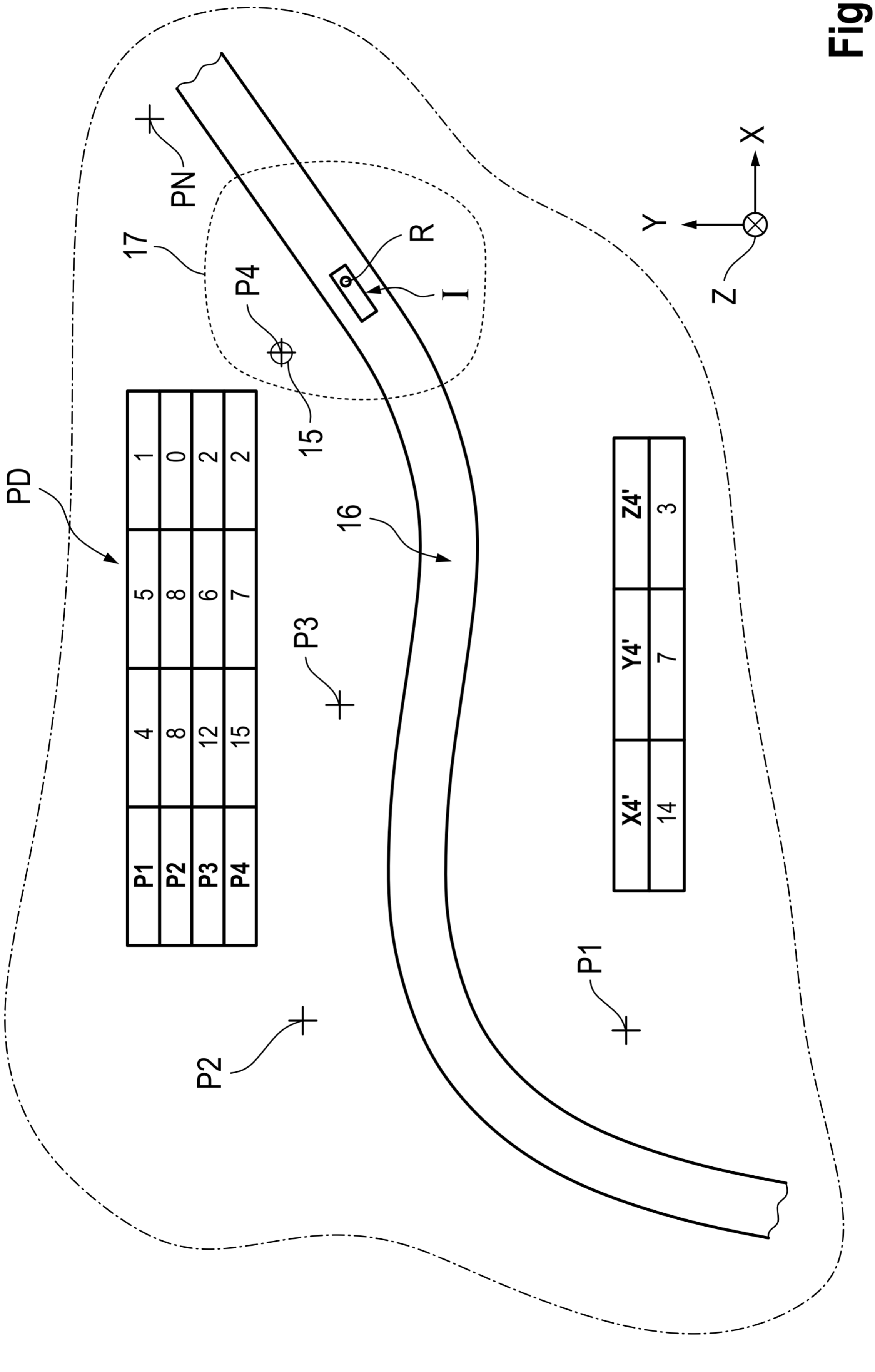

PN
17
R
P4
I
X
Y
Z
15
PD
P1 4 5 1
P2 8 8 0
P3 12 6 2
P4 15 7 2
16
P3
X4' Y4' Z4'
14 7 3
P1
P2


Fig. 7

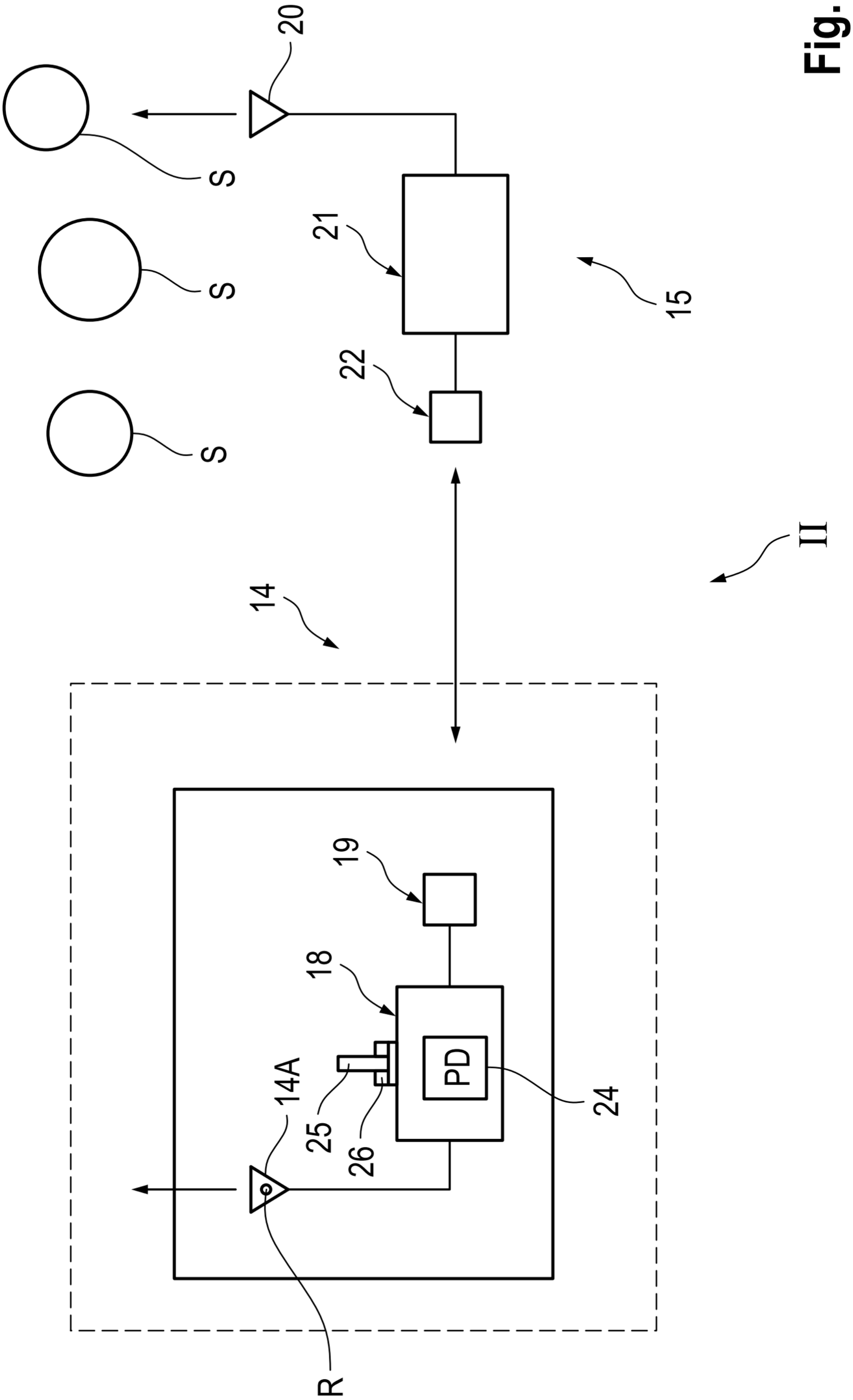


Fig. 8

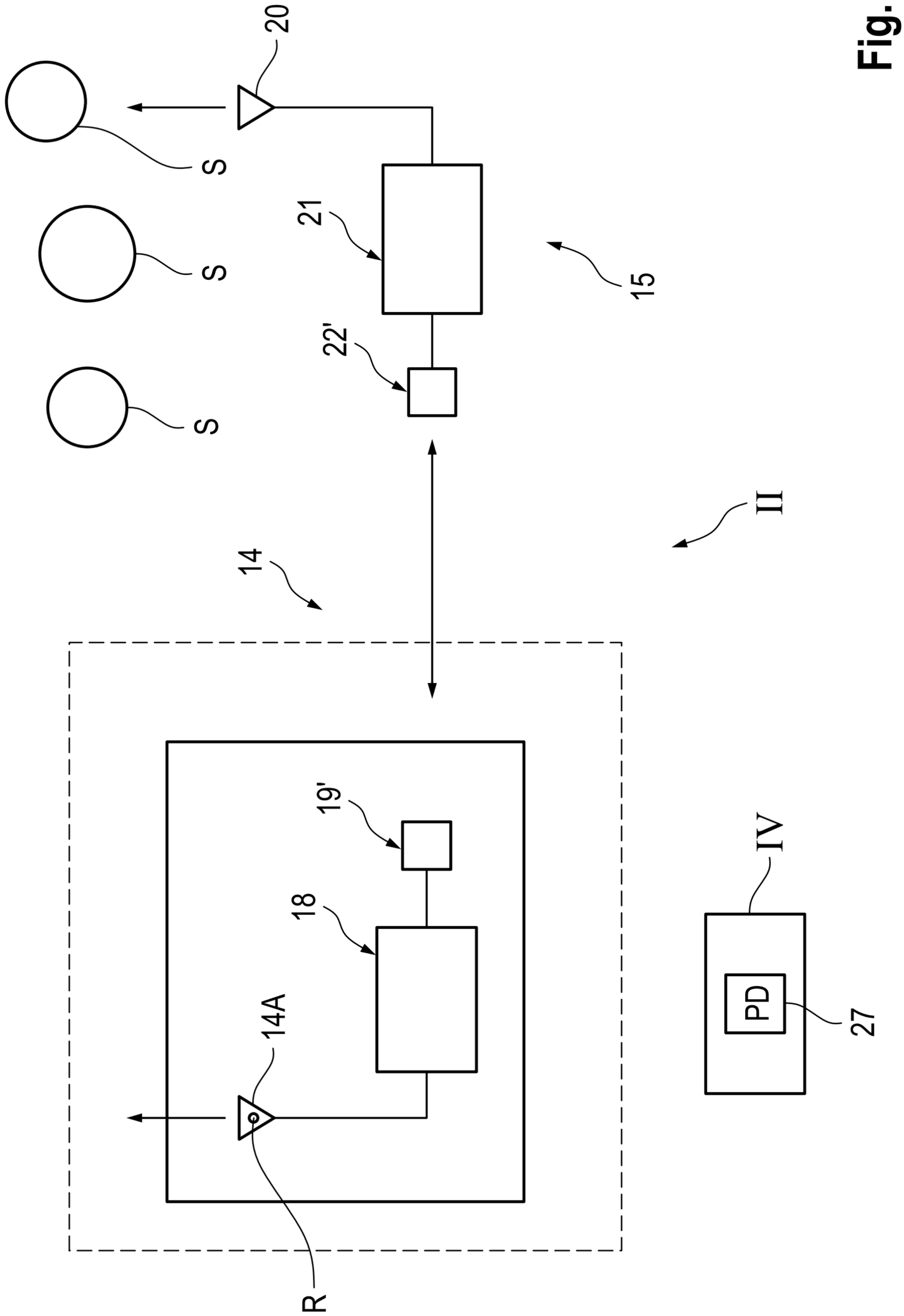


Fig. 9

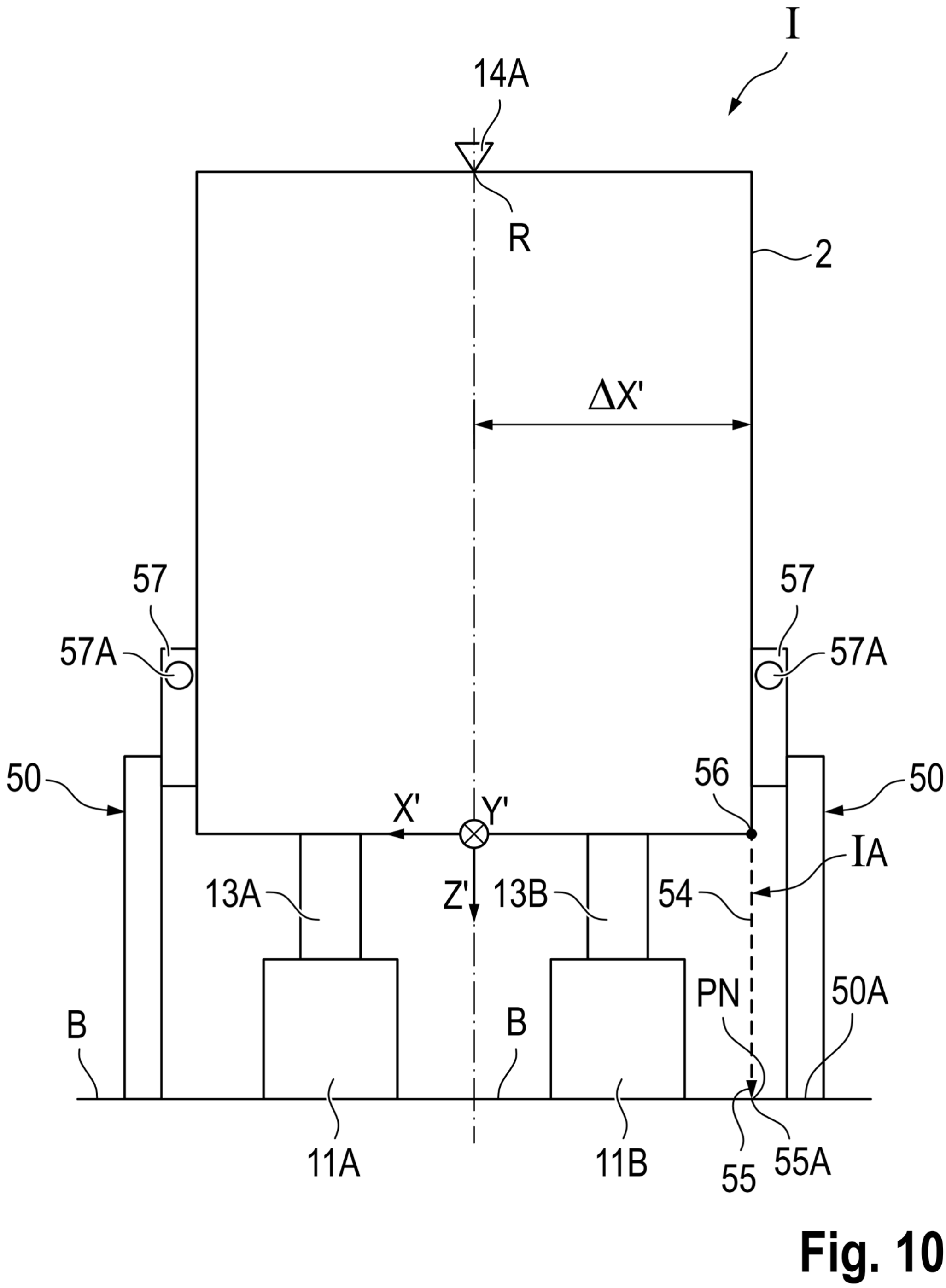
I
14A
R
2
ΔX'
57
57A
57
57A
50
56
50
X'
Y'
IA
13A
Z'
13B
54
PN
50A
B
B
11A
11B
55
55A

Fig. 10

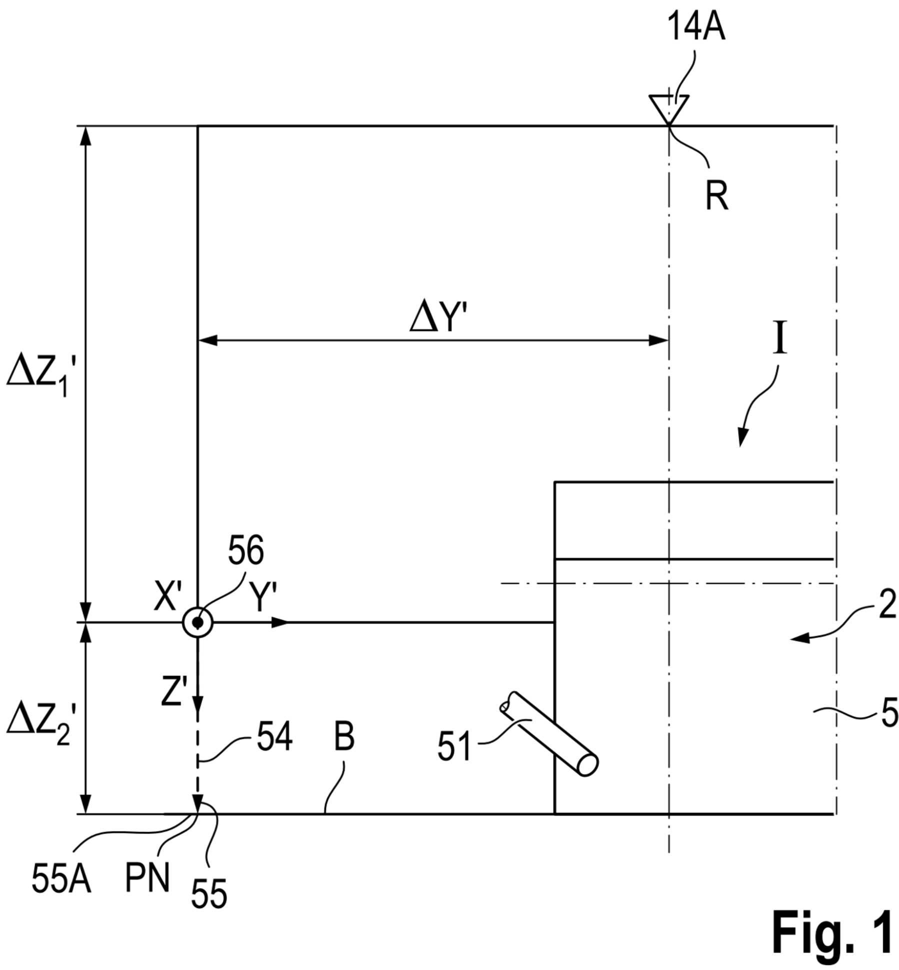


Fig. 11

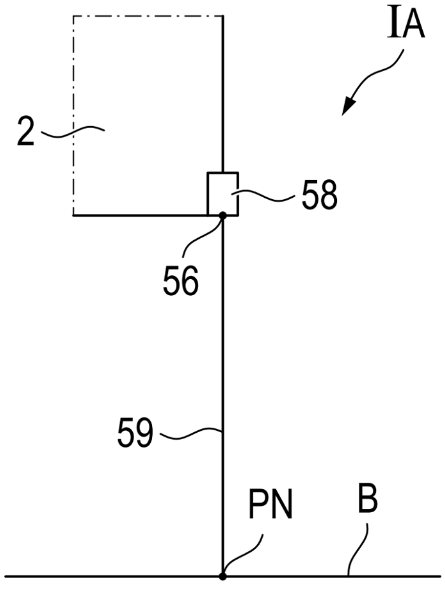


Fig. 12

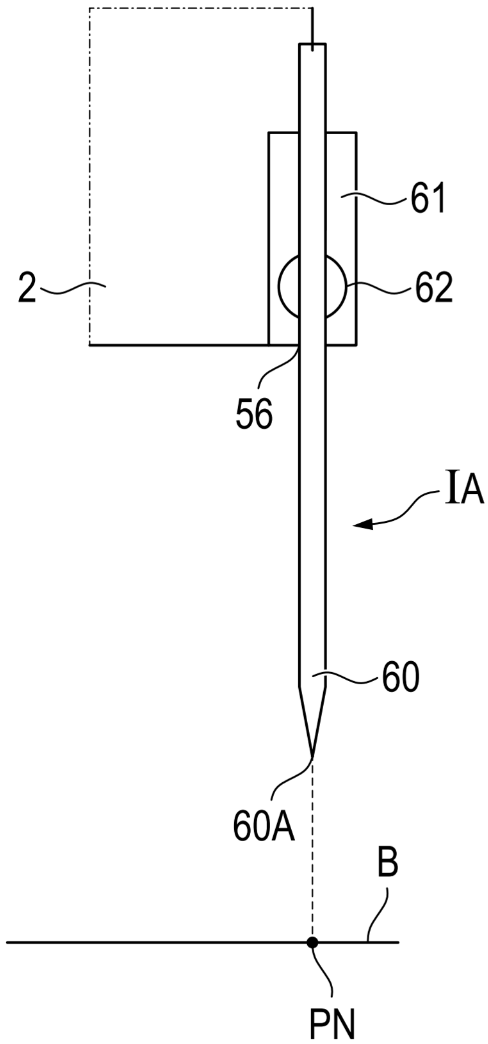


Fig. 13A

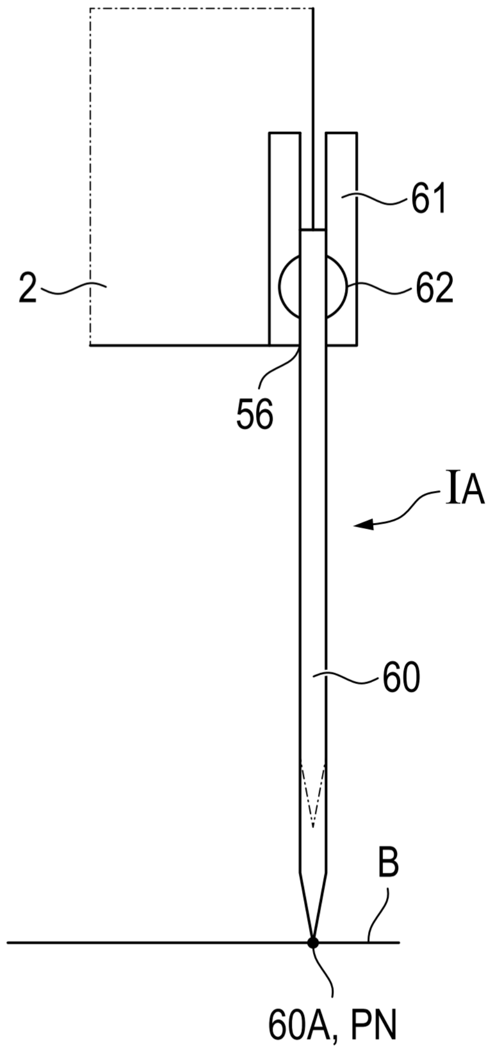


Fig. 13B

Europäisches Patentamt
European Patent Office
Office européen des brevets

# EUROPÄISCHER RECHERCHENBERICHT

Nummer der Anmeldung
EP 25 20 6096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 866 053 A1 (MTS MASCHINENTECHNIK SCHRODE AG [DE]) 29. April 2015 (2015-04-29) * Abbildung 1 * * Absatz [0015] * * Absatz [0019] - Absatz [0021] * * Absatz [0025] - Absatz [0026] * ----- | 1-15 | INV. G01S19/07 |
| Y | EP 4 343 386 A1 (WIRTGEN GMBH [DE]) 27. März 2024 (2024-03-27) * Abbildungen 3,4 * * Absatz [0043] - Absatz [0056] * ----- | 1-15 | |
| A | AU 2020 285 595 A1 (MAGELLAN SYSTEMS JAPAN INC [JP]) 22. Juli 2021 (2021-07-22) * Abbildung 3 * * Absatz [0063] * ----- | 1-15 | |
| A | WO 00/17957 A1 (CHAWALES NICOS [DE]) 30. März 2000 (2000-03-30) * Abbildungen 1,2 * * Seite 5 * ----- | 1-15 | RECHERCHIERTE SACHGEBIETE (IPC) |
| A | KR 2006 0003546 A (HYUNDAI MOTOR CO LTD [KR]) 11. Januar 2006 (2006-01-11) * Abbildung 1 * * Seite 3 - Seite 4 * ----- | 1-15 | G01S |

Der vorliegende Recherchenbericht wurde für alle Patentansprüche erstellt

2

| Recherchenort | Abschlußdatum der Recherche | Prüfer |
|---|---|---|
| München | 22. Februar 2026 | Hekmat, Taymoor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 20 6096

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-02-2026

| Im Recherchenbericht angeführtes Patentdokument | Datum der Veröffentlichung | Mitglied(er) der Patentfamilie | Datum der Veröffentlichung |
|---|---|---|---|
| EP 2866053 A1 | 29-04-2015 | DE 102013221301 A1 | 23-04-2015 |
| | | EP 2866053 A1 | 29-04-2015 |
| EP 4343386 A1 | 27-03-2024 | CN 117761746 A | 26-03-2024 |
| | | DE 102022124484 A1 | 28-03-2024 |
| | | EP 4343386 A1 | 27-03-2024 |
| | | US 2024103179 A1 | 28-03-2024 |
| AU 2020285595 A1 | 22-07-2021 | AU 2020285595 A1 | 22-07-2021 |
| | | EP 3977171 A1 | 06-04-2022 |
| | | JP 7468912 B2 | 16-04-2024 |
| | | JP 2022534348 A | 29-07-2022 |
| | | TW 202101029 A | 01-01-2021 |
| | | US 2021318446 A1 | 14-10-2021 |
| | | WO 2020240307 A1 | 03-12-2020 |
| WO 0017957 A1 | 30-03-2000 | EP 1118136 A1 | 25-07-2001 |
| | | WO 0017957 A1 | 30-03-2000 |
| KR 20060003546 A | 11-01-2006 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19756676 C1
- DE 102022124484 A1